# EUROPÄISCHE PATENTSCHRIFT

(11) **EP 3 579 203 B1**
(45) Veröffentlichungstag und Bekanntmachung des Hinweises auf die Patenterteilung: **11.08.2021**
(21) Anmeldenummer: 18176158.6
(22) Anmeldetag: 05.06.2018
(51) Int. Cl.: G07F 7/06, B65G 11/02, B65G 11/20, B65G 47/68

(54) **LEERGUT-LEITELEMENT, LEERGUT-HANDHABUNGSEINRICHTUNG UND LEERGUT-RÜCKNAHMESYSTEM**
EMPTY GOODS GUIDE ELEMENT, EMPTY GOODS HANDLING DEVICE AND EMPTY GOODS WITHDRAWAL SYSTEM
ÉLÉMENT DE GUIDAGE DE PRODUITS VIDES, DISPOSITIF DE MANIPULATION DE PRODUITS VIDES ET SYSTÈME DE RÉCUPÉRATION DE PRODUITS VIDES

(43) Veröffentlichungstag der Anmeldung: 11.12.2019
(73) Patentinhaber: Wincor Nixdorf International GmbH, 33106 Paderborn (DE)
(72) Erfinder: SCHRÖDER, Berthold, 98693 Ilmenau (DE); BÖRNER, Steve, 99310 Witzleben (DE)

(56) Entgegenhaltungen:
- EP-A1- 3 009 200
- WO-A1-98/02256
- DE-C1- 10 144 518
- US-A- 3 392 815
- US-A- 3 650 368
- US-A- 4 792 031
- US-A- 4 953 682
- US-B2- 8 096 403

## Beschreibung

Die Erfindung betrifft eine Leergut-Handhabungseinrichtung und ein Leergut-Rücknahmesystem.

Leergut, welches z.B. in Form von unterschiedlichen Gebinden vorliegt, wie z.B. Einweg- und Mehrwegflaschen, beispielsweise Kunststoff- und Glasflaschen, wird von Verbrauchern in der Regel einzeln mittels Leergutrücknahmeautomaten, welche z.B. in Supermärkten aufgestellt sind, zurückgegeben. Herkömmlicherweise wird das zurückgegebene Leergut in Form von unterschiedlichen und miteinander vermischten Flaschen von den Leergutrücknahmeautomaten auf einen Leergut-Sortiertisch ausgegeben und wird anschließend von Mitarbeitern der Leergutrücknahmestelle manuell in Leergutkisten einsortiert, sodass sortenreine Leergutkisten zu einer Leergutverwertungsstelle transportiert werden können. Die räumlichen Gegebenheiten am Aufstellungsort der Leergutrücknahmeautomaten erfordern häufig, dass zwischen dem Leergutrücknahmeautomat und dem Sortiertisch weitere Transporteinrichtungen für das Leergut vorhanden sein müssen, bspw. Richtungsänderungsförderbänder, um das Leergut auf den Leergut-Sortiertisch zu überführen, da der Leergutrücknahmeautomat nicht direkt am Leergut-Sortiertisch oder in einer ungünstigen Position dazu aufgestellt ist. Jedoch nimmt diese übliche Aufstellung viel Platz ein und benötig besagte zusätzliche Transporteinrichtungen, welche eine Systemkomplexität erhöhen und die Kosten steigern.

Beispielsweise ist aus EP 3 009 200 A1 eine Leergut-Handhabungseinrichtung mit einem Leergut-Handhabungstisch und einer Leergut-Fördereinrichtung bekannt.

Weiter ist z.B. aus US 4 953 682 A oder US 3 650 368 A ein Leergut-Leitelement bekannt. Weitere Leergut-Leitelemente sind z.B. aus US 8 096 403 B2, US 3 392 815 A, DE 101 44 518 C1 und WO 98/02256 A1 bekannt. Zudem ist beispielsweise aus US 4 792 031 A ein Führungselement für Schüttgut bekannt.

Es werden eine Leergut-Handhabungseinrichtung und ein Leergut-Rücknahmesystem geschaffen, welche eine variable und platzsparende Aufstellung eines Leergutrücknahmeautomaten und eines Leergut-Sortiertischs ermöglichen.

Es werden eine Leergut-Handhabungseinrichtung gemäß Anspruch 1 und ein Leergut-Rücknahmesystem gemäß Anspruch 10 bereitgestellt. Weitere Ausführungsformen der Leergut-Handhabungseinrichtung und des Leergut-Rücknahmesystems sind in den jeweiligen abhängigen Ansprüchen beschrieben.

Ein Leergut-Leitelement zur Verwendung in der erfindungsgemäßen Leergut-Handhabungseinrichtung zum Leiten von Leergut unterschiedlichen Typs (z.B. Glas- und Kunststoffflaschen, Einweg- und Mehrwegflaschen, Dosen, etc.) unter Verwendung von Schwerkraft weist einen Zentralabschnitt, einen ersten Leitabschnitt und einen zweiten Leitabschnitt auf. Der Zentralabschnitt erstreckt sich zu einer Schwerkraftrichtungsachse (Hochachse des Leergut-Leitelements) mit einem Zentralabschnitt-Neigungswinkel (bspw. in der Form einer Platte oder einer Rinne) und weist in Schwerkraftrichtung nacheinander folgend einen Leergut-Eingabebereich (bspw. zum Eingeben des Leerguts in das Leergut-Leitelement), einen Leergut-Leitbereich (bspw. zum Umlenken bzw. Leiten des Leerguts im Leergut-Leitelement von einer Eingaberichtung in eine Ausgaberichtung) und einen Leergut-Ausgabebereich (bspw. zum Ausgeben des umgelenkten Leerguts aus dem Leergut-Leitelement) auf, wobei der Zentralabschnitt als eine Rutschbahn mit einer bezüglich der Schwerkraftrichtungsachse ersten und zweiten Randseite (z.B. Längsrandseiten) ausgeführt ist.

Der erste Leitabschnitt (z.B. eine Platte) ist an der ersten oder an der zweiten Randseite der Rutschbahn angeordnet, erstreckt sich zumindest entlang des Leergut-Eingabebereichs und des Leergut-Leitbereichs (bspw. auch entlang des Leergut-Ausgabebereichs) an der Randseite der Rutschbahn, ist mit
dieser entlang der Randseite verbunden und weist zur Schwerkraftrichtungsachse einen Erster-Leitabschnitt-Neigungswinkel auf (bspw. ist der Erster-Leitabschnitt-Neigungswinkel ein Winkel, welcher zwischen z.B. einer ebenen Fläche des ersten Leitabschnitts und der

Schwerkraftrichtungsachse messbar ist), um die Rutschbahn seitlich (an der entsprechenden Randseite des Zentralabschnitts) zu begrenzen.

Der zweite Leitabschnitt (z.B. eine rechteckige, bspw. trapezförmige, Platte) ist an der anderen Randseite der Rutschbahn angeordnet, erstreckt sich zumindest entlang des Leergut-Leitbereichs (bspw. auch entlang des Leergut-Ausgabebereichs) an der Randseite der Rutschbahn, ist mit
dieser entlang der Randseite verbunden und weist zur Schwerkraftrichtungsachse einen Zweiter-Leitabschnitt-Neigungswinkel auf (bspw. ist der Zweiter-Leitabschnitt-Neigungswinkel ein Winkel, welcher zwischen einer z.B. ebenen Fläche des zweiten Leitabschnitts und der Schwerkraftrichtungsachse messbar ist), um die Rutschbahn seitlich (an der entsprechenden Randseite des Zentralabschnitts) zu begrenzen.

Das Leergut-Leitelement weist einen dritten Leitabschnitt (z.B. eine Platte) auf, welcher an der Randseite der Rutschbahn angeordnet ist, an der der zweite Leitabschnitt angeordnet ist. Der dritte Leitabschnitt ist an einem Übergang des Leergut-Eingabebereichs zum Leergut-Leitbereich mit dem zweiten Leitabschnitt verbunden und eingerichtet, um (z.B. zumindest im Wesentlichen) parallel zum dritten Leitabschnitt Leergut in den Leergut-Eingabebereich zuzuführen.

Der Zentralabschnitt kann z.B. eine (z.B. zumindest im Wesentlichen ebene, bspw. gleichschenklige) Trapezgestalt haben, welche quer zur Schwerkraftrichtungsachse einen in Schwerkraftrichtung oberen Rand des Leergut-Eingabebereichs als eine lange Grundseite, einen in Schwerkraftrichtung unteren Rand des Leergut-Ausgabebereichs als eine kurze Grundseite und die erste und die zweite Randseite der Rutschbahn als Schenkel entlang der Schwerkraftrichtungsachse aufweisen kann, wobei die Schenkel in Schwerkraftrichtung z.B. zueinander konvergieren. Beispielsweise kann sich die Trapezgestalt des Zentralabschnitts bis zum Übergang zwischen dem Leergut-Leitbereich und dem Leergut-Ausgabebereich erstrecken, d.h., die Gestalt des Leergut-Ausgabebereichs muss nicht trapezförmig sein.

Der erste Leitabschnitt kann z.B. eine (z.B. zumindest im Wesentlichen ebene, bspw. gleichschenklige) Trapezgestalt haben, welche quer zur Schwerkraftrichtungsachse einen zum oberen Rand des Leergut-Eingabebereichs korrespondierenden Rand als eine lange Grundseite, einen zum unteren Rand des Leergut-Leitbereichs korrespondierenden Rand als eine kurze Grundseite und entlang der Schwerkraftrichtungsachse die erste Randseite oder die zweite Randseite der Rutschbahn als einen ersten Schenkel aufweisen kann, wobei ein zweiter Schenkel der Trapezgestalt einen äußeren Rand des ersten Leitabschnitts bilden kann, welcher z.B. zum ersten Schenkel konvergiert oder parallel sein kann.

Der Zentralabschnitt, der erste Leitabschnitt und der zweite Leitabschnitt können z.B. als eine Rinne ausgebildet sein (z.B. als eine im Querschnitt zur Rutschbahn U-förmige Rinne), welche sich in Schwerkraftrichtung z.B. trichterförmig verjüngt (bspw. ist eine Breite des Leergut-Leitelements quer zur Rutschbahn an einem in Schwerkraftrichtung oberen Ende (bspw. Leergut-Eingabebereich) größer als eine Breite des Leergut-Leitelements quer zur Rutschbahn an einem in Schwerkraftrichtung unteren Ende (bspw. Leergut-Ausgabebereich). Weiter können optional der erste und der zweite Leitabschnitt an der zugehörigen der ersten und der zweiten Randseite mit einem sich in Schwerkraftrichtung verringernden Krümmungsradius mit dem Zentralabschnitt verbunden sein.

Der Zentralabschnitt-Neigungswinkel kann z.B. in einem Bereich von in etwa 25° bis in etwa 35°, bevorzugt in etwa 30°, liegen, der Erster-Leitabschnitt-Neigungswinkel kann z.B. in einem Bereich von in etwa 5° bis in etwa 15°, bevorzugt in etwa 10°, liegen und der Zweiter-Leitabschnitt-Neigungswinkel kann z.B. in einem Bereich von in etwa 15° bis in etwa 25°, bevorzugt in etwa 20°, liegen.

Die erfindungsgemäße Leergut-Handhabungseinrichtung weist einen Leergut-Handhabungstisch, eine Leergut-Fördereinrichtung und das oben beschriebene Leergut-Leitelement auf. Der Leergut-Handhabungstisch weist eine Tischfläche mit einem Leergut-Zuführabschnitt, dem Leergut unterschiedlichen Leerguttyps zuführbar ist (z.B. durch das Leergut-Leitelement) und einem Leergut-Abführabschnitt auf, in dem das zugeführte Leergut abführbar ist (z.B. zur weiteren Handhabung wie bspw. Transport oder Sortieren). Beispielsweise kann der Leergut-Abführabschnitt eine Schnittstelle zu einem Leergut-Sortiertisch bilden, sodass, wenn der Leergut-Handhabungstisch mit dem Leergut-Sortiertisch kombiniert ist, das Leergut vom Leergut-Abführabschnitt des Leergut-Handhabungstischs auf den Leergut-Sortiertisch abführbar ist. Weiter beispielsweise kann der Leergut-Handhabungstisch den Leergut-Sortiertisch aufweisen, d.h., der Leergut-Handhabungstisch kann z.B. der Leergut-Sortiertisch sein.

Die Leergut-Fördereinrichtung ist an dem Leergut-Handhabungstisch (z.B. auf der Tischfläche des Leergut-Handhabungstischs) angebracht, erstreckt sich zwischen dem Leergut-Zuführabschnitt und dem Leergut-Abführabschnitt und ist derart ausgebildet, dass das dem Leergut-Zuführabschnitt zugeführte Leergut (bspw. vom Leergut-Leitelement im Leergut-Zuführabschnitt auf die Leergut-Fördereinrichtung abgestellte Leergut) von dem Leergut-Zuführabschnitt zu dem Leergut-Abführabschnitt entlang einer Förderrichtung überführbar ist.

Das Leergut-Leitelement ist am Leergut-Handhabungstisch mit der Schwerkraftrichtungsachse senkrecht zur und oberhalb der Tischfläche angebracht (bspw. mittels einer entsprechenden Haltevorrichtung angebracht sein) und am Leergut-Zuführabschnitt derart angeordnet, dass die Förderrichtung in einer Ebene liegt, welche der Zentralabschnitt-Neigungswinkel aufspannt, um das Leergut, welches dem Leergut-Leitelement durch den Leergut-Eingabebereich zugeführt wird, durch den Leergut-Leitbereich zu leiten und durch den Leergut-Ausgabebereich in einer Aufrecht-Position in den Leergut-Zuführabschnitt des Leergut-Handhabungstischs abzustellen (bspw. in dem Fall eines Förderbands als die Leergut-Fördereinrichtung läuft das Förderband zwischen der Tischfläche und dem Leergut-Ausgabebereich des Leergut-Leitelements). Wenn die Leergut-Handhabungseinrichtung entlang der Schwerkraftrichtungsachse betrachtet wird, ist das Leergut in den Leergut-Eingabebereich des Leergut-Leitelements in/aus einer Richtung eingebbar, welche in einem Bereich liegt, der an einer Seite des ersten Leitabschnitts zur Förderrichtung in etwa 15°, bevorzugt in etwa 10°, einschließt und an einer Seite des zweiten Leitabschnitts zur Förderrichtung in etwa 110°, bevorzugt in etwa 97,5°, einschließt.

Die Leergut-Fördereinrichtung kann z.B. als ein Förderband ausgebildet sein, welches auf der Tischfläche (bspw. auf der Tischfläche gleitend) vom Leergut-Zuführabschnitt zum Leergut-Abführabschnitt verläuft (bspw. an der Unterseite der Tischfläche zurückläuft). Beispielsweise kann unterhalb des Förderbands (des oberen Gurts des Förderbands) im Leergut-Zuführabschnitt des Leergut-Handhabungstischs eine Leergut-Dämpfungseinrichtung bereitgestellt sein, die z.B. eingerichtet sein kann, um Stöße des auf den Leergut-Zuführabschnitt aufgestellten (darauf abgestellten) Leerguts zu dämpfen.

Die Leergut-Dämpfungseinrichtung kann z.B. durch zwei (oder mehr) in einer Aussparung der Tischfläche des Leergut-Handhabungstischs übereinander angeordnete Dämpfungselemente (z.B. Gummiplatten) unterschiedlicher Härte gebildet sein (bspw. kann eine obere Fläche der Leergut-Dämpfungseinrichtung mit der Tischfläche bündig sein).

Die Tischfläche des Leergut-Handhabungstischs kann z.B. beidseitig zur Förderrichtung Tischflächenränder (z.B. Seiten-Begrenzungsränder) aufweisen, die z.B. entweder in der Förderrichtung zueinander (z.B. abschnittsweise) derart konvergieren, dass die Tischfläche in einem Tischbreitenreduktionsbereich in Förderrichtung ausgehend vom Leergut-Leitelement quer zur Förderrichtung eine geringere Breite hat als in einem Bereich entgegen der Förderrichtung ausgehend vom Leergut-Leitelement, oder kann im Tischbreitenreduktionsbereich eine Aussparung (z.B. Tasche) aufweisen, welche lokal eine Breite der Tischfläche quer zur Förderrichtung reduziert.

Das Leergut-Handhabungssystem kann z.B. weiter eine Steuereinrichtung und eine Aufstellunterstützungseinrichtung aufweisen. Die Steuereinrichtung kann z.B. einen Sensor (z.B. Positionssensor, einen optischen Sensor, bspw. eine Kamera oder eine Lichtschranke, etc.) aufweisen, der der Steuereinrichtung Informationen darüber bereitstellt, ob dem Leergut-Leitelement Leergut eingegeben wird (bspw. können der Steuereinrichtung die Informationen auch über eine Schnittstelle eingegeben werden, bspw. von einem Leergutrücknahmeautomaten, welcher dem Leergut-Leitelement das Leergut eingibt).

Die Aufstellunterstützungseinrichtung kann z.B. zumindest ein von dem Leergut-Leitelement in Förderrichtung entfernt angeordnetes Stützelement aufweisen, welches durch die Steuereinrichtung gesteuert selektiv in eine erste Position, in der im Leergut-Zuführabschnitt durch den Leergut-Ausgabebereich des Zentralabschnitts des Leergut-Leitelements und das Stützelement ein Raum gebildet ist, in dem aufgestelltes Leergut aufnehmbar und durch das Stützelement in der Förderrichtung zurückhaltbar ist, und in eine zweite Position bringbar sein (z.B. schwenkbar, verschiebbar, bspw. durch einen Elektromotor der Aufstellunterstützungseinrichtung), in der das Stützelement den Raum in der Förderrichtung nicht begrenzt und in dem Raum aufgestelltes Leergut in der Förderrichtung überführbar (z.B. abführbar) ist.

Ein Leergut-Rücknahmesystem gemäß einer beispielhaften Ausführungsform kann eine wie zuvor beschriebene Leergut-Handhabungseinrichtung und einen Leergutrücknahmeautomaten aufweisen, in welchen hinein manuell Leergut eingebbar ist (z.B. durch einen Verbraucher) und von welchem das eingegebene Leergut automatisch dem Leergut-Eingabebereich des Leergut-Leitelements zuführbar ist. Der Leergutrücknahmeautomat kann ein herkömmlicher Leergutrücknahmeautomat sein, wie er zur Rücknahme von Einweg- und Mehrwegflaschen gebräuchlich ist, und ist hier nicht detailliert beschrieben.

Das Leergut-Rücknahmesystem kann weiter z.B. eine Leergutrutsche aufweisen, welche an einem ersten Ende mit einer Leergutausgabe des Leergutrücknahmeautomaten (z.B. an der Rückseite des Leergutrücknahmeautomaten) verbunden ist und am zweiten Ende im Leergut-Eingabebereich des Leergut-Leitelements mit zumindest einem vom Zentralabschnitt, vom ersten Leitabschnitt und vom dritten Leitabschnitt des Leergut-Leitelements verbunden ist (z.B. befestigt, bspw. verschraubt, verklebt, verrastet, etc.). Die Leergutrutsche kann z.B. derart eingerichtet sein, dass das aus dem Leergutrücknahmeautomaten ausgegebene Leergut z.B. zumindest im Wesentlichen parallel zu dem zumindest einen vom Zentralabschnitt, vom ersten Leitabschnitt und vom dritten Leitabschnitt in den Leergut-Eingabebereich des Leergut-Leitelements eingebbar ist.

Ausführungsbeispiele der Erfindung sind in den Figuren dargestellt und werden im Folgenden näher erläutert.

Es zeigen:
- Figur 1: ein Leergut-Leitelement zur Verwendung in der erfindungsgemäßen Leergut-Handhabungseinrichtung in drei Ausführungsformen, wobei die Figur 1a eine Vorderansicht, die Figur 1b eine Draufsicht und die Figur 1c eine Seitenansicht eines Leergut-Leitelements einer ersten Ausführungsform, die Figur 1d eine Vorderansicht eines Leergut-Leitelements einer zweiten Ausführungsform und die Figur 1e eine perspektivische Ansicht eines Leergut-Leitelements einer dritten Ausführungsform ist;
- Figur 2: eine erfindungsgemäße Leergut-Handhabungseinrichtung in zwei Ausführungsformen, wobei die Figur 2a eine Draufsicht und die Figur 2b eine Seitenansicht einer ersten Ausführungsform und die Figur 2c eine Draufsicht einer zweiten Ausführungsform ist; und
- Figur 3: ein erfindungsgemäßes Leergut-Rücknahmesystem in zwei Ausführungsformen, wobei die Figur 3a eine Draufsicht einer ersten Ausführungsform und die Figur 3b eine Draufsicht einer zweiten Ausführungsform ist.

In der folgenden ausführlichen Beschreibung wird auf die beigefügten Figuren Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "links", "rechts", "Schwerkraftrichtung", usw. mit Bezug auf die Orientierung der beschriebenen Figur(en) verwendet. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden Begriffe wie z.B. "verbunden", "angebracht" sowie "gekuppelt" verwendet zum Beschreiben sowohl einer direkten als auch einer indirekten Verbindung, einer direkten oder indirekten Anbringung sowie einer direkten oder indirekten Kupplung. In den Figuren werden identische oder ähnliche Elemente mit identischen Bezugszeichen versehen, soweit dies zweckmäßig ist.

Der in dieser Beschreibung verwendete Begriff "in etwa" gibt übliche Toleranzen von ± 5% an, bspw. in Schrittweiten von 1%.

Der nachfolgend verwendete Begriff "Leergut" schließt unterschiedliche Verpackungen ein, z.B. Getränkeverpackungen in Form von Gebinden, wie z.B. Einwegflaschen, beispielsweise Kunststoffflaschen wie PET-Flaschen, Mehrwegflaschen, beispielsweise Glasflaschen (z.B. Bier-, Wasser-, Saftflaschen) oder Kunststoffflaschen (z.B. Mehrweg-PET-Flaschen), und Dosen, beispielsweise Aluminiumdosen. Typischer Weise ist derartiges Leergut zumindest im Wesentlichen in der Gestalt eines Zylinders mit einer Bodenfläche (Standfläche) an einem Ende davon ausgebildet, wobei im Weiteren eine Anordnung von Leergut, in welcher das Leergut auf der Bodenfläche steht bzw. mit dieser nach unten (Schwerkraftrichtung) weist, als eine Aufrecht-Position des Leerguts bezeichnet wird.

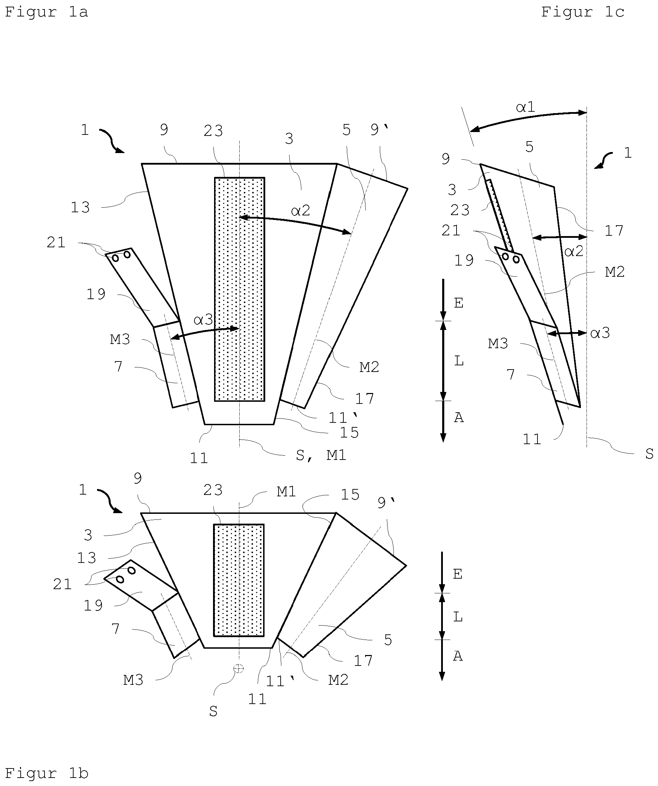

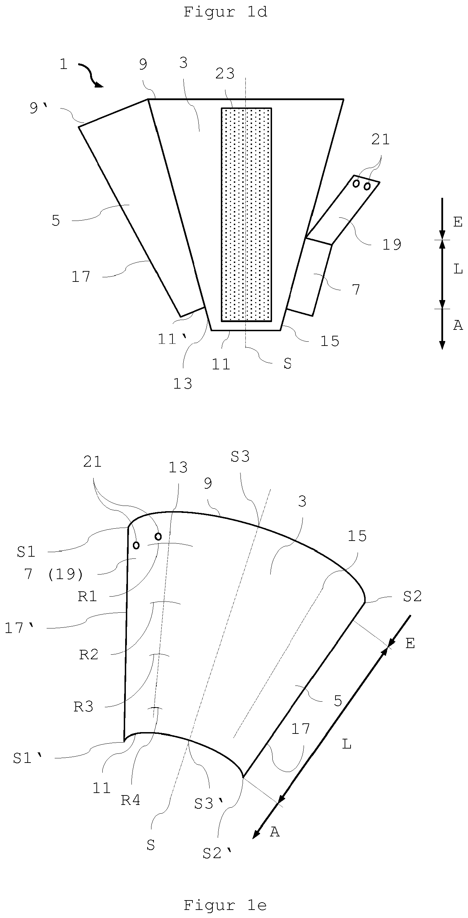

Die Figur 1 zeigt schematisch ein Leergut-Leitelement 1 zur Verwendung in der erfindungsgemäßen Leergut-Handhabungseinrichtung (im Weiteren auch als "linkes Leergut-Leitelement" bezeichnet), wobei die **Figur 1a** eine Vorderansicht, die **Figur 1b** eine Draufsicht und die **Figur 1c** eine Seitenansicht davon zeigt. Weiter wird in den Figuren auf eine Schwerkraftrichtungsachse S Bezug genommen, wobei die Schwerkraft (Schwerkraftrichtung) in den Figuren entlang der Schwerkraftrichtungsachse S von oben nach unten (bspw. Figuren 1a und 1c) bzw. in die Zeichenebene hineinwirkt (bspw. Figur 1b).

Das Leergut-Leitelement 1 dient, um Leergut mit der Bodenfläche voran und in einer von der Aufrecht-Position abweichenden Position eingegeben zu bekommen, bspw. von einer weiter unten beschriebenen Leergut-Eingabeeinrichtung (z.B. einer Leergutrutsche) und das eingegebene Leergut durch geleitetes (geführtes) Herabrutschen in die Aufrecht-Position zu bringen und auszugeben.

Im vorliegenden Fall ist das Leergut-Leitelement 1 aus Blech (z.B. Aluminium- oder Stahlblech) geformt und weist einen Zentralabschnitt 3, einen ersten Leitabschnitt 5 und einen zweiten Leitabschnitt 7 auf. Weiter weist das Leergut-Leitelement 1 in der Schwerkraftrichtung nacheinander folgend einen Leergut-Eingabebereich E, einen Leergut-Leitbereich L und einen Leergut-Ausgabebereich A auf. Weiter ist der Zentralabschnitt 3 in einer gleichschenkligen Trapezgestalt ausgebildet, welche quer zur Schwerkraftrichtungsachse S einen in Schwerkraftrichtung oberen Rand 9 des Leergut-Eingabebereichs E als eine lange Grundseite, einen in der Schwerkraftrichtung unteren Rand 11 des Leergut-Ausgabebereichs A als eine kurze Grundseite und eine erste und eine zweite (linke und rechte) Randseite 13, 15 als Schenkel entlang der Schwerkraftrichtungsachse S aufweist, wobei die Schenkel in der Schwerkraftrichtung zueinander konvergieren. Der Zentralabschnitt 3 ist z.B. als eine (zumindest im Wesentlichen) ebene (flache) Platte ausgebildet und weist zur Schwerkraftrichtungsachse S einen Zentralabschnitt-Neigungswinkel α1 von z.B. in etwa 35° bis in etwa 25°, bevorzugt in etwa 30° auf. Der Zentralabschnitt-Neigungswinkel α1 ist z.B. zwischen der Schwerkraftrichtungsachse S sowie einer Mittellinie M1 (Trapezhöhe und Halbierende der Grundseiten) der Trapezgestalt messbar. Der Zentralabschnitt 3 bildet innerhalb dieser Ränder eine Rutschbahn für Leergut aus, d.h., ist in der Lage, um Leergut unter Schwerkraftwirkung entlang des Zentralabschnitts 3 herabrutschen zu lassen. Das heißt, in Verwendung wird dem Leergut-Leitelement 1 Leergut mit einer Ausrichtung eingegeben, die von der Aufrecht-Position abweicht (z.B. mit der Bodenfläche voran schräg zur Schwerkraftrichtung, bspw. zumindest im Wesentlichen parallel zum Zentralabschnitt 3) und wird durch Schwerkraftwirkung im Leergut-Leitbereich L in eine (z.B. zumindest im Wesentliche) Aufrecht-Position umgelenkt durch Herabrutschen auf dem Zentralabschnitt 3 (und ggf. abhängig von der Eingaberichtung durch Kontaktieren des ersten und/oder des zweiten Leergut-Leitabschnitts 5, 7), bevor das Leergut das Leergut-Leitelement 1 über den Leergut-Ausgabebereich A des Zentralabschnitts 3 in einer (z.B. zumindest im Wesentlichen) Aufrecht-Position verlässt.

Der erste Leitabschnitt 5 ist an der zweiten (rechten) Randseite 15 des Zentralabschnitts 3 angeordnet (z.B. mit dieser verbunden, bspw. einstückig) und erstreckt sich entlang des Leergut-Eingabebereichs E und des Leergut-Leitbereichs L (der erste Leitabschnitt 5 begrenzt die Rutschbahn zur rechten Seite hin). Weiter ist der erste Leitabschnitt 5 als eine z.B. ebene (flache) Platte in einer gleichschenkligen Trapezgestalt ausgebildet, welche quer zur Schwerkraftrichtungsachse S einen zum oberen Rand 9 des Leergut-Eingabebereichs E korrespondierenden Rand 9' als eine lange Grundseite, einen zu einem unteren Rand des Leergut-Leitbereichs L korrespondierenden Rand 11' als eine kurze Grundseite und entlang der Schwerkraftrichtungsachse S die zweite Randseite 15 des Leitabschnitts 3 als einen ersten Schenkel aufweist. Ein zweiter Schenkel der Trapezgestalt ist durch einen äußeren Rand 17 des ersten Leitabschnitts 5 gebildet, welcher in der Schwerkraftrichtung zum ersten Schenkel konvergiert. Der erste Leitabschnitt 5 weist zur Schwerkraftrichtungsachse S z.B. einen (z.B. windschiefen) Erster-Leitabschnitt-Neigungswinkel α2 von in etwa 5° bis in etwa 15°, bevorzugt in etwa 10° auf, welcher z.B. zwischen einer Mittellinie M2 (Trapezhöhe und Halbierende der Grundseiten) des ersten Leitabschnitts 5 und der Schwerkraftrichtungsachse S messbar ist.

Der zweite Leitabschnitt 7 ist an der ersten (linken) Randseite 13 des Zentralabschnitts 3 angeordnet (z.B. mit dieser verbunden, bspw. einstückig) und erstreckt sich entlang des Leergut-Leitbereichs L (der zweite Leitabschnitt 7 begrenzt die Rutschbahn zur linken Seite hin). Weiter ist der zweite Leitabschnitt 7 als eine z.B. ebene (flache) Platte und mit z.B. einer Rechteckgestalt ausgebildet, wobei sich zwei lange Ränder davon z.B. parallel zur ersten Randseite 13 erstrecken und sich zwei kurze Ränder davon z.B. zumindest im Wesentlichen senkrecht zu den langen Rändern erstrecken (z.B. erstreckt sich der untere Rand des zweiten Leitabschnitts 7 in der Art des korrespondierenden Rands 11' des ersten Leitabschnitts 5). Weiter weist der zweite Leitabschnitt 7 zur Schwerkraftrichtungsachse S z.B. einen (z.B. windschiefen) Zweiter-Leitabschnitt-Neigungswinkel α3 von in etwa 15° bis in etwa 25°, bevorzugt in etwa 20° auf, welcher z.B. zwischen einer Mittellinie M3 (Halbierende der kurzen Seiten) des zweiten Leitabschnitts 7 und der Schwerkraftrichtungsachse S messbar ist.

Für den Fall, dass der Zentralabschnitt 3, der erste Leitabschnitt 5 und/oder der zweite Leitabschnitt 7 keine ebene (flache) Plattengestalt haben, bspw. in Rutschrichtung und/oder quer dazu gekrümmt sind (z.B. eine quer und/oder längs zur Rutschrichtung gekrümmte Rinne ausbilden), können der Zentralabschnitt-Neigungswinkel α1, der Erster-Leitabschnitt-Neigungswinkel α2 und/oder der Zweiter-Leitabschnitt-Neigungswinkel α3 anstatt auf die entsprechenden Mittellinien M1, M2, M3 der Abschnitte (plattenförmige Zentral- und Leitabschnitte) auf entsprechende Mittelinien der gekrümmten Abschnitte (Zentral- und Leitabschnitte) bezogen werden. Beispielsweise können die entsprechenden Winkel in dem Fall der gekrümmten Abschnitte an einem unteren Rand dieser Abschnitte messbar sein.

Weiter weist das Leergut-Leitelement 1 einen dritten Leitabschnitt 19 auf, welcher an der ersten Randseite 13 des Zentralabschnitts 3 angeordnet ist. Der dritte Leitabschnitt 19 weist z.B. zumindest im Wesentlichen die gleiche Gestalt (rechteckige Platte) wie der zweite Leitabschnitt 7 auf und ist mit diesem (z.B. an der oberen kurzen Seite des zweiten Leitabschnitts 7) an einem Übergang des Leergut-Eingabebereichs E zum Leergut-Leitbereich L verbunden. Der dritte Leitabschnitt 19 ist z.B. eine Verlängerung des zweiten Leitabschnitts 7 und erstreckt sich im vorliegenden Fall mit einem Winkel auswärts (nach links) von der dritten Mittellinie M3 weg. Der Winkel ist derart wählbar, um von der linken oberen Seite Leergut in das Leergut-Leitelement 1 einführen zu können, d.h., der dritte Leitabschnitt 19 dient z.B. als eine (weitere) Leergut-Eingabeschnittstelle zwischen dem Leergut-Leitelement 1 und einer Leergut-Eingabeeinrichtung (z.B. einer weiter unten beschriebenen Leergutrutsche), um parallel zum dritten Leitabschnitt 19 Leergut in den Leergut-Eingabebereich E zuzuführen, d.h., dem Leergut-Leitelement 1 ist das Leergut über die erste (linke) Randseite 13 zuführbar (z.B. zusätzlich oder alternativ zu einem Zuführen über die obere Randseite 9 des Zentralabschnitts 3). Hierzu ist der dritte Leitabschnitt 19 mit Anschlussmitteln 21 bereitgestellt, um eine Verbindung mit der Leergut-Eingabeeinrichtung ausbilden zu können (z.B. Schraub-/Nietlöcher, Rastverbindungshaken oder Aufnahmen, Klebeflächen, etc.). Alternativ kann der dritte Leitabschnitt 19 auch im zweiten Leitabschnitt 7 integriert sein (z.B. nach außen (links) gekrümmt sein). Folglich kann dem Leergut-Leitelement 1 z.B. sowohl über den Zentralabschnitt 3 wie auch den dritten Leitabschnitt 19 Leergut in den Leergut-Eingabebereich E eingegeben werden.

Weiter können z.B. an der Rückseite des Zentralabschnitts 3 Anschlussmittel bereitgestellt sein (z.B. Schraub-/Nietlöcher, Rastverbindungshaken oder Aufnahmen, Klebeflächen, etc.; nicht gezeigt), um das Leergut-Leitelement 1 mit einer weiter unten beschriebenen Leergut-Handhabungsvorrichtung zu verbinden. Zudem können z.B. am Leergut-Ausgabebereich A ebenfalls Anschlussmittel in gleicher Art und für den gleichen Zweck bereitgestellt sein (nicht gezeigt).

Zur Dämpfung eines Stoßes, wenn Leergut in das Leergut-Leitelement 1 eingegeben wird, können z.B. der Zentralabschnitt 3 und der erste Leitabschnitt 5 (bspw. auch der zweite und der dritte Leitabschnitt 7, 19) mit Dämpfungsbereichen 23 bereitgestellt sein (in den Figuren 1a bis 1c beispielhaft für den Zentralabschnitt 3 gezeigt; für die anderen Abschnitte gilt diese Darstellung analog), wobei Leergut beim Rutschen diese Dämpfungsbereiche 23 kontaktieren kann. Weiter dienen die Dämpfungsbereiche 23 durch Reibung mit Leergut dazu, dieses beim Umlenken (Rutschen bzw. Leiten) zu bremsen. Beispielsweise ist in den Dämpfungsbereichen 23 ein elastisches und bezogen auf das Material des Leergut-Leitelements 1 weniger glattes Material angebracht, bspw. eine Gummimatte, welches einen Stoß des Leerguts absorbieren kann und das Leergut beim Rutschen bremsen kann. Insbesondere schwere Flaschen (Glasflaschen) können hierdurch stark gebremst werden, wohingegen leichte Flaschen (z.B. Kunststoffflaschen) weniger stark gebremst werden können.

In der **Figur 1d** ist eine Vorderansicht eines Leergut-Leitelements zur Verwendung in der erfindungsgemäßen Leergut-Handhabungseinrichtung gezeigt (im Weiteren auch als "rechtes Leergut-Leitelement" bezeichnet), welche sich von der ersten Ausführungsform (Figuren 1a bis 1c) dadurch unterscheidet, dass der erste, der zweite und der dritte Leitabschnitt 5, 7, 19 an der anderen Seite bereitgestellt sind. Das heißt, der erste Leitabschnitt 5 ist an der ersten (linken) Randseite 13 des Zentralabschnitts 3 bereitgestellt, und der zweite und der dritte Leitabschnitt 7, 19 sind an der zweiten (rechten) Randseite 15 des Zentralabschnitts 3 bereitgestellt. Somit ist bei dieser Ausführungsform dem Leergut-Leitelement 1 das Leergut über die zweite (rechte) Randseite 15 zuführbar (z.B. zusätzlich zum Zentralabschnitt 3). Ansonsten ist diese Ausführungsform gegenüber der vorhergehenden Ausführungsform unverändert, sodass eine weitere Beschreibung davon ausgelassen wird.

Die **Figur 1e** zeigt eine perspektivische Ansicht eines Leergut-Leitelements 1 zur Verwendung in der erfindungsgemäßen Leergut-Handhabungseinrichtung. Hier bilden der Zentralabschnitt 3, der erste Leitabschnitt 5 und der zweite Leitabschnitt 7 eine Rinne aus, welche sich in Schwerkraftrichtung trichterförmig verjüngt. Beispielsweise ist hier das Leergut-Leitelement 1 ein spritzgegossenes Kunststoffteil. Das heißt, das Leergut-Leitelement 1 erstreckt sich in Schwerkraftrichtung von der oberen Randseite 9 bis zur unteren Randseite 11, wobei sich an der ersten (linken) Seite 13 des Zentralabschnitts 3 entlang der gesamten Länge der zweite Leergut-Leitabschnitt 7 erstreckt, welcher in diesem Fall auch die Funktion des dritten Leergut-Leitabschnitts übernimmt, d.h., die Anschlussmittel 21 aufweist. An der zweiten (rechten) Randseite 15 des Zentralabschnitts 3 erstreckt sich entlang der gesamten Länge des Zentralabschnitts 3 der erste Leergut-Leitabschnitt 5.

Somit ist der Leergut-Eingabebereich E oberhalb der Anschlussmittel 21 angeordnet, gefolgt vom Leergut-Leitbereich L, welcher sich bis zur unteren Randseite 9 des Zentralabschnitts 3 erstreckt. Der Leergut-Ausgabebereich A schließt sich in Schwerkraftrichtung dem Leergut-Leitbereich L an und ist somit am unteren Rand 9 des Leergut-Leitelements 1 bereitgestellt. Das heißt, in dieser Ausführungsform bildet zumindest im Wesentlichen der Leergut-Leitbereich L die Rutschbahn des Leergut-Leitelements 1.

Der obere Rand 9 und der untere Rand 11 des Leergut-Leitelements 1 bilden z.B. einen Teil einer großen (oberen) bzw. einer kleinen (unteren) Ellipse, d.h., erstrecken sich jeweilig von einem ersten Scheitelpunkt S1, S1' (ein erster Schnittpunkt der langen Ellipsenachse mit der Ellipse) zu einem zweiten Scheitelpunkt S2, S2' (ein zweiter Schnittpunkt der langen Ellipsenachse mit der Ellipse). Eine Verbindungslinie zwischen den entsprechenden ersten Scheitelpunkten S1, S1' bzw. den zweiten Scheitelpunkten S2, S2' bildet einen äußeren Rand des Leergut-Leitelements 1 (den rechten Rand 17 und einen linken Rand 17'). Somit ist im Bereich vom ersten Scheitelpunkt S1, S1' bis zur ersten (linken) Randseite 13 der zweite Leitabschnitt 7 als eine Rinne ausgebildet, welche durch die erste Randseite 13 des Zentralabschnitts 3 mit diesem verbunden ist. Der Zentralabschnitt 3 ist in einem Bereich, in welchem die kurze Ellipsenachse den oberen bzw. den unteren Rand 9, 11 schneidet (dritter Scheitelpunkt S3, S3'), als eine Rinne ausgebildet. An der zweiten (rechten) Randseite 15 ist der Zentralabschnitt 3 mit dem ersten Leitabschnitt 5 verbunden, welcher sich bis zum zweiten Scheitelpunkt S2, S2' erstreckt und in diesem Bereich eine Rinne ausbildet. Somit ist das Leergut-Leitelement 1 aus drei Rinnensektionen gebildet, d.h., die Rutschbahn hat drei rinnenförmige Sektionen, wobei der Zentralabschnitt 3 die flachste (am wenigsten gekrümmte) Rinne bildet und der erste und der zweite Leitabschnitt 5, 7 die tiefsten (am stärksten gekrümmten) Rinnen bilden. Diese Konfiguration ist nicht auf einen oberen und einen unteren Rand 9, 11 beschränkt, welche die oben beschriebene (Teil-) Ellipsenform aufweisen, sondern können auch andere Formen haben, solange die drei Rinnensektionen ausgebildet sind.

Weiter können sich beispielsweise der obere und der untere Rand 9, 11 über die jeweiligen Scheitelpunkte S1, S1', S2, S2' entlang der Ellipsenform hinaus erstrecken, um sich einander anzunähern. Das heißt, das Leergut-Leitelement 1 kann als (z.B. zumindest im Wesentlichen geschlossener) Trichter geformt sein.

Die Krümmungen (Krümmungsradien) der Rinnen sind entsprechend dem zu erwartenden Leergut anpassbar, d.h., die Größe (Längen der Ellipsenachsen) der oberen und der unteren Ellipse sind derart anpassbar, dass das größte zu erwartende Leergut in der Aufrecht-Position vom Leergut-Leitbereich L in den Leergut-Ausgabebereich A rutschen und das Leergut-Leitelement 1 verlassen kann. Hierzu können die erste und die zweite Randseite 13, 15, d.h., die Verbindungen zu dem ersten und zu dem zweiten Leergut-Leitabschnitt 5, 7, einen sich in Schwerkraftrichtung verringernden Krümmungsradius aufweisen (in der Figur 1e beispielhaft für die erste Randseite 13 dargestellt): Die Krümmungsradien R1 bis R4 nehmen von oben (R1) nach unten (R4) ab, sodass das Leergut je weiter es zum unteren Rand 11 des Leergut-Leitelements 1 rutscht, stärker in die Aufrecht-Position umgelenkt wird.

Im Weiteren können die Beschreibungen für die in den Figuren 1a bis 1d dargestellten Leergut-Leitelemente 1 hier analog zutreffen, sodass eine weitergehemde Beschreibung des Leergut-Leitelements 1 dieser Ausführungsform ausgelassen wird. Das heißt, der Erster-Leitabschnitt-Neigungswinkel α2 und/oder der Zweiter-Leitabschnitt-Neigungswinkel α3 können beispielsweise auf den entsprechenden Rand (linker Rand 17' und rechter Rand 17) des Leergut-Leitelements 1 bezogen sein. Beispielsweise können der Erster-Leitabschnitt-Neigungswinkel α2 und/oder der Zweiter-Leitabschnitt-Neigungswinkel α3 auch auf die erste Randseite 13 und die zweite Randseite 15 bezogen sein.

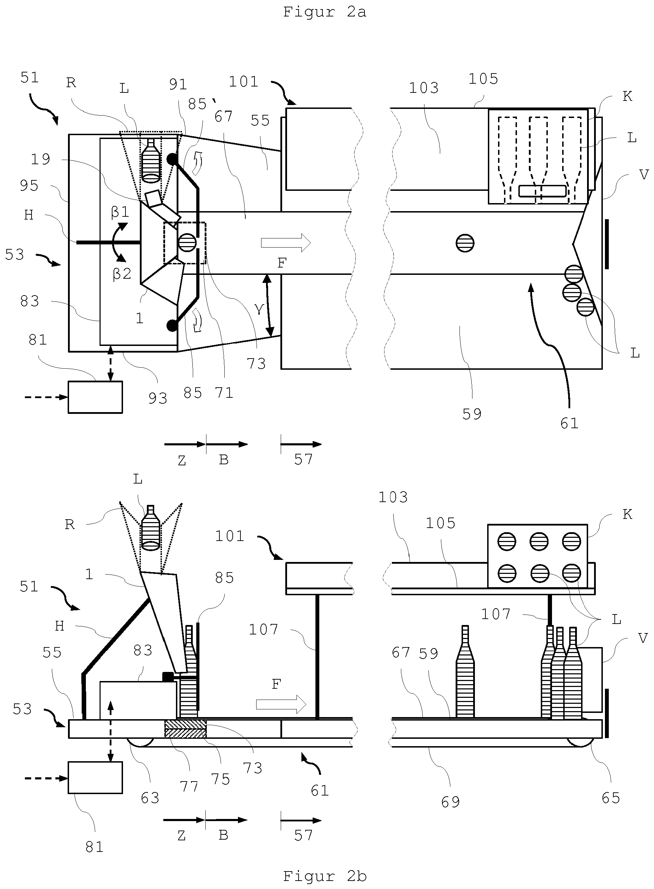

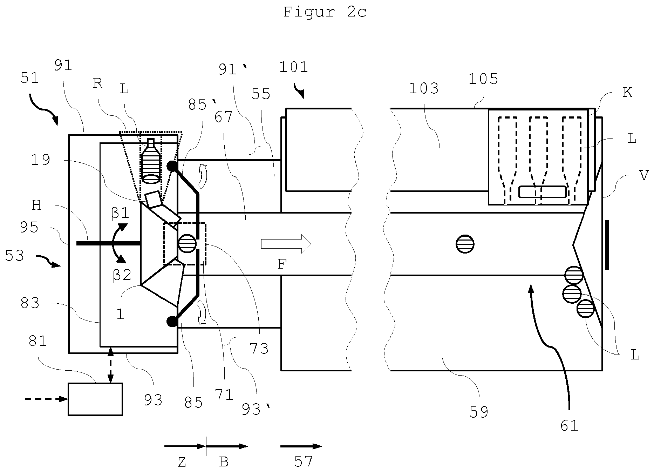

Die Figur 2 zeigt schematisch eine Leergut-Handhabungseinrichtung 51 einer ersten beispielhaften Ausführungsform, wobei die **Figur 2a** eine Draufsicht und die **Figur 2b** eine Seitenansicht der Leergut-Handhabungseinrichtung zeigen.

Die Leergut-Handhabungseinrichtung 51 weist einen Leergut-Handhabungstisch 53 mit einer Tischfläche 55 auf, wobei auf der Tischfläche ein Leergut-Zuführabschnitt Z und ein Leergut-Abführabschnitt B bereitgestellt sind. Über den Leergut-Zuführabschnitt Z ist der Leergut-Handhabungseinrichtung 51 Leergut L in der Aufrecht-Position zuführbar und mittels des Leergut-Abführabschnitts B abführbar. Im vorliegenden Fall ist der Leergut-Abführabschnitt B an einen Leergut-Sortiertisch 57 angeschlossen, auf welchem das vom Leergut-Abführabschnitt B abgeführte Leergut L sortierbar ist, bspw. manuell in Kisten sortierbar ist (der Leergut-Sortiertisch 57 weist eine Tischfläche 59 auf, welche mit der Tischfläche 55 des Leergut-Handhabungstischs 53 zumindest im Wesentlichen bündig ausgeführt ist). Das heißt, Die Leergut-Handhabungseinrichtung 51 ist vom Leergut-Sortiertisch 57 separat. Alternativ ist es möglich, dass die Leergut-Handhabungseinrichtung 51 den Leergut-Sortiertisch 57 aufweist und sich der Leergut-Abführabschnitt B auf den Leergut-Sortiertisch 57 erstreckt. In der vorliegenden Ausführungsform sind Tischbeine, Tischflächenbegrenzungswände, Sensoren, etc. der Leergut-Handhabungseinrichtung 51 nicht dargestellt.

Weiter weist die Leergut-Handhabungseinrichtung 51 eine Leergut-Fördereinrichtung 61 auf, welche an dem Leergut-Handhabungstisch 53 angebracht ist und sich ausgehend vom Leergut-Zuführabschnitt Z, über den Leergut-Abführabschnitt B zum Leergut-Sortiertisch 57 erstreckt. Die Leergut-Fördereinrichtung 61 ist als ein Förderband zwischen zwei an (einander entgegengesetzten) Schmalseiten des Leergut-Handhabungstischs 53 und des Leergut-Sortiertischs 57 angebrachten Tragrollen 63, 65 ausgebildet, wobei ein oberer Gurt 67 (Arbeitsgurt bzw. Arbeitsband) auf der Tischfläche 55 z.B. gleitet und ein unterer Gurt 69 (Leergurt bzw. Leerband) unterhalb des Leergut-Handhabungstischs 53 zurückläuft. Das heißt, in der vorliegenden Ausführungsform wird für die Leergut-Fördereinrichtung 61 eine der Tragrollen am Leergut-Sortiertisch 57 angebracht. Beispielsweise kann die Tragrolle 63 des Leergut-Handhabungstischs 53 oder die Tragrolle 65 des Leergut-Sortiertischs 57 (z.B. durch einen Elektromotor) angetrieben sein. Das Förderband überführt das Leergut L, welches innerhalb des Leergut-Zuführabschnitts Z auf den oberen Gurt 67 aufgestellt wird, entlang einer Förderrichtung F (von links nach rechts) zu dem Leergut-Sortiertisch 57, auf welchem sich das Leergut sammelt, bspw. durch ein Verteilelement V quer zur Förderrichtung F vom oberen Gurt 67 herabgeschoben und auf die Tischfläche 59 des Leergut-Sortiertischs 57 abgestellt wird.

Zudem weist die Leergut-Handhabungseinrichtung 51 das wie oben beschriebene rechte Leergut-Leitelement 1 auf, welches am Leergut-Handhabungstisch 53 mit der Schwerkraftrichtungsachse S senkrecht zur und oberhalb der Tischfläche 55 mittels einer Halterung H angebracht ist und am Leergut-Zuführabschnitt Z derart angeordnet ist, dass die Förderrichtung F in einer Ebene liegt, welche der Zentralabschnitt-Neigungswinkel α1 aufspannt (bspw. kann das Leergut-Leitelement 1 am unteren Rand 11 einen (nicht gezeigten) Befestigungsabschnitt (bspw. ein daran anschließendes Befestigungsblech) zusätzlich und/oder alternativ zur Halterung 11 aufweisen). Über eine Leergutrutsche R, welche an einem Ende mit dem dritten Leergut-Leitabschnitt 19 des Leergut-Leitelements 1 verbunden ist und an dem anderen Ende mit einem (nicht gezeigten) Leergutrücknahmeautomaten verbunden ist, ist dem Leergut-Eingabebereich E des Leergut-Leitelements 1 das Leergut L zuführbar, in der vorliegenden Ausführungsform aus einer zumindest im Wesentlichen horizontalen Richtung von der rechten Seite des Leergut-Leitelements 1. Ein Winkel zwischen der Förderrichtung F und einer Eingaberichtung des Leerguts L (erster Eingabewinkel β1 ausgehend von der Förderrichtung F in Richtung zum zweiten Leitabschnitt des Leergut-Leitelements 1) ist im vorliegenden Fall in etwa 90°. Das hier verwendete rechte Leergut-Leitelement 1 ermöglicht hier erste Eingabewinkel β1 in einem Bereich von einschließlich in etwa 0° (das Leergut L wird direkt in den Zentralabschnitt 3 des Leergut-Leitelements 1 und in Förderrichtung F eingegeben) bis einschließlich in etwa 110° (das Leergut L wird über den dritten Leitabschnitt in den Zentralabschnitt des Leergut-Leitelements 1 und entgegen der Förderrichtung F eingegeben), wobei ein alternativer erster Eingabewinkel β1 in etwa 97,5° sein kann (nicht dargestellt). Andererseits ist auch ein Winkel zwischen der Förderrichtung F und einer Eingaberichtung des Leerguts L (zweiter Eingabewinkel β2 ausgehend von der Förderrichtung F in Richtung zum ersten Leitabschnitt des Leergut-Leitelements 1) im vorliegenden Fall von in etwa 15°, bevorzugt in etwa 10°, realisierbar. Somit kann dem Leergut-Leitelement 1 abhängig von der Anbringung der Leergutrutsche R Leergut L im Bereich der Eingabewinkel β1 und β2 eingebbar sein. Das dem Leergut-Leitelement 1 eingegebene Leergut L wird durch den Leergut-Leitbereich L geleitet und durch den Leergut-Ausgabebereich A in der Aufrecht-Position in den Leergut-Zuführabschnitt Z des Leergut-Handhabungstischs 53 durch das Leergut-Leitelement 1 abgestellt.

Weiter ist im Leergut-Handhabungstisch 53 unterhalb des Förderbands (oberer Gurt 67) im Leergut-Zuführabschnitt Z eine Leergut-Dämpfungseinrichtung 71 bereitgestellt, die eingerichtet ist, um Stöße des auf den Leergut-Zuführabschnitt Z aufgestellten Leerguts L zu dämpfen (bspw. von Glasflaschen). Die Leergut-Dämpfungseinrichtung 71 ist in einer Aussparung 73 des Leergut-Handhabungstischs 53 in einem Bereich angeordnet, welcher unterhalb des Leergut-Ausgabebereichs A des Leergut-Leitelements 1 angeordnet ist, d.h., unterhalb des oberen Gurts 67. In der Aussparung 73 sind zwei Dämpfungselemente unterschiedlicher Härte als Platten aus elastischem Material übereinander angeordnet. Beispielsweise sind die Dämpfungselemente als eine erste Gummiplatte 75 und eine zweite Gummiplatte 77 ausgebildet, wobei die erste Gummiplatte 75 eine Härte hat, welche größer ist als die der zweiten Gummiplatte 77, die unterhalb der ersten Gummiplatte 75 angeordnet ist. Eine obere Fläche der ersten Gummiplatte 75 ist zumindest im Wesentlichen bündig mit der Tischfläche 55 angeordnet. Eine untere Fläche der ersten Gummiplatte 75 ist durch eine obere Fläche der zweiten Gummiplatte 77 elastisch gestützt, wobei die zweite Gummiplatte 77 mit dem Leergut-Handhabungstisch 53 verbunden ist (z.B. durch ein die untere Fläche der zweiten Gummiplatte 77 stützendes Blech; nicht dargestellt).

Die Leergut-Handhabungseinrichtung 51 weist weiter z.B. eine Steuereinrichtung 81 und eine Aufstellunterstützungseinrichtung 83 auf. Die Steuereinrichtung 81 weist z.B. einen Sensor (nicht dargestellt) auf, der der Steuereinrichtung 81 Informationen darüber bereitstellt, ob dem Leergut-Leitelement 1 Leergut L eingegeben wird. Der Sensor kann z.B. auch als eine Datenschnittstelle ausgeführt sein, über die z.B. ein Leergutrücknahmeautomat die entsprechenden Informationen bereitstellt. Die Steuereinrichtung 81 ist mit der Aufstellunterstützungseinrichtung 83 verbunden, um diese zu steuern. Beispielsweise kann die Steuereinrichtung 81 weitere Sensoren aufweisen bzw. mit diesen verbunden sein (bspw. einen Sensor, welcher eine Menge des auf dem Leergut-Sortiertisch 57 befindlichen Leerguts erfasst). Weiter kann die Steuereinrichtung 81 mit einem Antrieb der Leergut-Fördereinrichtung 61 verbunden sein, um diese zu steuern.

Die Aufstellunterstützungseinrichtung 83 unterstützt das Leergut-Leitelement 1 beim Aufstellen des Leerguts L auf den oberen Gurt 67, bspw. in Fällen, in welchen das auf den oberen Gurt 67 aufgestellte Leergut L einfach aus der Aufrecht-Position kippen kann. Hierzu weist die Aufstellunterstützungseinrichtung 83 ein erstes und ein zweites von dem Leergut-Leitelement 1 in der Förderrichtung F entfernt angeordnetes Stützelement 85, 85' auf, welche durch die Steuereinrichtung 81 gesteuert selektiv in eine erste Position, in der im Leergut-Zuführabschnitt Z durch den Leergut-Ausgabebereich A des Zentralabschnitts 3 des Leergut-Leitelements 1 und die Stützelemente 85, 85' ein Raum gebildet ist, in dem auf den oberen Gurt 67 aufgestelltes Leergut L aufnehmbar und durch die Stützelemente 85, 85' in der Förderrichtung F zurückhaltbar ist, und in eine zweite Position bringbar (z.B. schwenkbar) sind, in der die Stützelemente 85, 85' den Raum in der Förderrichtung F nicht begrenzen und in dem Raum aufgestelltes Leergut L in der Förderrichtung F überführbar ist. Das heißt, die Stützelemente 85, 85' sind in einem Fall geschlossen (wie in den Figuren 2a und 2b gezeigt), in welchem das Leergut L auf den oberen Gurt 67 aufgestellt wird. Hierdurch kann das Leergut L daran gehindert werden, umzukippen. Anschließend schwenken die Stützelemente 85, 85' in die zweite Position (vgl. Pfeile des Schwenkens der Stützelemente 85, 85' in der Figur 2a), um das Leergut L freizugeben, sodass dieses durch den oberen Gurt 67 zum Leergut-Sortiertisch 57 transportierbar ist.

Weiter ist der Leergut-Handhabungstisch 53 derart eingerichtet, dass die Tischfläche 55 des Leergut-Handhabungstischs 53 beidseitig zur Förderrichtung F Tischflächenränder (Längsränder) aufweist (einen ersten Tischflächenrand 91 auf der einen Seite und einen zweiten Tischflächenrand 93 auf der anderen Seite). Weiter weist die Tischfläche einen stirnseitigen Rand 95 (links) auf, welcher sich quer zur Förderrichtung F erstreckt und die beiden Tischflächenränder 91, 93 miteinander verbindet. Die Tischflächenränder 91, 93 weisen in einem Bereich entgegen der Förderrichtung F ausgehend vom Leergut-Leitelement 1 eine konstante Breite auf und konvergieren in Förderrichtung F ausgehend vom Leergut-Leitelement 1 zueinander (Tischbreitenreduktionsbereich). Beispielsweise liegt im konvergierenden Bereich der Tischflächenränder 91, 93 (Tischbreitenreduktionsbereich) ein Randwinkel γ zwischen dem jeweiligen Tischflächenrand 91, 93 und der Förderrichtung in einem Bereich von in etwa 5° bis 10°, bevorzugt in etwa 7,5° (es ist lediglich der Randwinkel γ des zweiten Tischflächenrands 93 in der Figur 2a gezeigt). Der Randwinkel γ ermöglicht es, einen Leergutrücknahmeautomaten (nicht gezeigt) zu dem Eingabewinkel β1 korrespondierend am Leergut-Handhabungstisch 53 anzuordnen. Beispielsweise kann die Breite quer zur Förderrichtung F bis auf eine Breite des oberen Gurts 67 reduzierbar sein.

Zum Sortieren des auf dem Leergut-Sortiertisch 57 gesammelten Leerguts L kann der Leergut-Sortiertisch 57 mit einer Kistenablage 101 bereitgestellt sein, welche oberhalb der Tischfläche 59 und an einer Seite des oberen Gurts 67 angeordnet ist, um darauf Kisten (Leergutkisten) K platzieren zu können. Die Kistenablage 101 ist z.B. aus einer ersten Platte 103 (Ablageplatte), welche sich beispielsweise zumindest im Wesentlichen über die gesamte Länge (entlang der Förderrichtung F) des Leergut-Sortiertischs 57 erstreckt und zur Tischfläche 59 einen Winkel von z.B. in etwa 5° bis 20°, bevorzugt in etwa 10°, aufweist (die erste Platte 103 fällt mit diesem Winkel zum Rand des Leergut-Sortiertischs 57 ab), und einer zweiten Platte 105 (Randplatte) gebildet, welche sich an einem Außenrand der ersten Platte 103 entlang dieser z.B. zumindest im Wesentlichen rechtwinklig erstreckt. Das heißt, die Kistenablage 101 ist im Querschnitt zur Förderrichtung F betrachtet in L-Form ausgestaltet, wobei die erste Platte 103 den langen Schenkel und die zweite Platte 105 den kurzen Schenkel der L-Form bildet. Die Kistenablage kann mittels Halteteilen 107 an dem Rand des Leergut-Sortiertischs 57 befestigt sein. Im Betrieb sind die Kisten K mit ihrer Eingabeöffnung in Richtung zum oberen Gurt 67 weisend auf der ersten Platte 103 abstellbar (z.B. durch Arbeiter) und liegen aufgrund der Neigung der ersten Platte 103 an der zweiten Platte 105 an. Somit ist es durch die Arbeiter möglich, manuell das Leergut L vom Leergut-Sortiertisch 57 aufzunehmen und in die entsprechenden Kisten 7 einzusortieren.

Die **Figur 2c** ist eine Draufsicht auf eine zweite beispielhafte Ausführungsform der Leergut-Handhabungseinrichtung 51, welche eine weitere Ausgestaltung der Tischflächenränder 91, 93 zeigt. Da sich diese Ausführungsform lediglich durch die Tischflächenränder 91, 93 von der vorherigen Ausführungsform unterscheidet, werden Ausführungen zu bekannten Aspekten ausgelassen. Hier ist im Tischbreitenreduktionsbereich an den Tischflächenrändern 91, 93 jeweilig eine Aussparung 91', 93' (Tasche) ausgebildet, welche eine Breite der Tischfläche 55 quer zur Förderrichtung F reduziert.

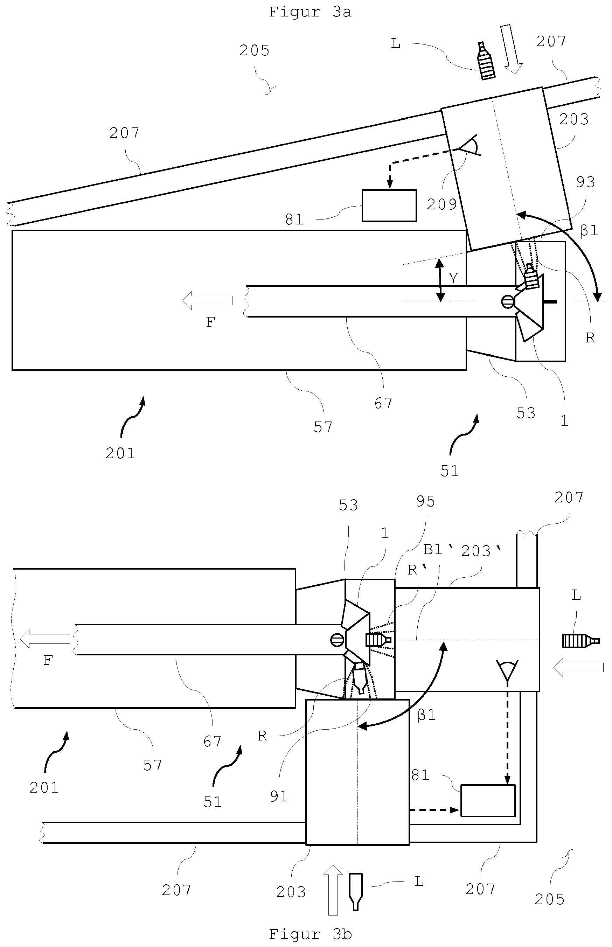

Die Figur 3 zeigt schematisch ein Leergut-Rücknahmesystem 201 in zwei beispielhaften Ausführungsformen, wobei die **Figur 3a** eine Draufsicht auf eine erste Ausführungsform und die **Figur 3b** eine Draufsicht auf eine zweite Ausführungsform ist. In den Figuren 3a und 3b sind die entsprechenden Leergut-Handhabungseinrichtungen 51 zur besseren Übersichtlichkeit vereinfacht dargestellt, d.h., nicht alle Komponenten sind dargestellt.

Den beispielhaften Leergut-Rücknahmesystemen 201 ist gemein, dass sie eine wie oben beschriebene Leergut-Handhabungseinrichtung 51 und zumindest einen Leergutrücknahmeautomaten 203 aufweisen, in welchen hinein manuell das Leergut L eingebbar ist und von welchem das eingegebene Leergut L automatisch dem Leergut-Eingabebereich E des Leergut-Leitelements 1 zuführbar ist. Hierzu ist die Leergutrutsche R bereitgestellt, welche an einem ersten Ende mit einer (rückseitigen) Leergutausgabe des Leergutrücknahmeautomaten 203 verbunden ist und am zweiten Ende im Leergut-Eingabebereich E des Leergut-Leitelements 1 mit zumindest einem vom Zentralabschnitt 3, vom ersten Leitabschnitt 5 und vom dritten Leitabschnitt 19 (bzw. mit dem zweiten Leitabschnitt 7, wenn dieser die Funktion des dritten Leitabschnitts 19 übernimmt) des Leergut-Leitelements 1 verbunden ist. Die Leergutrutsche R ist bspw. als eine zumindest im Wesentlichen V- oder U-förmige Rinne ausgebildet, in welcher das Leergut L rutschen kann (vgl. z.B. auch Figuren 2a und 2b). Das heißt, die Leergutrutsche R ist derart eingerichtet, dass das aus dem Leergutrücknahmeautomaten 203 ausgegebene Leergut L parallel zu dem mit dem zweiten Ende verbundenen Abschnitt in den Leergut-Eingabebereich E des Leergut-Leitelements 1 eingebbar ist. Die Leergutrutsche R leitet das Leergut L aus einer zumindest im Wesentlichen horizontalen Richtung (Ausgaberichtung des Leergutrücknahmeautomaten 203) mit der Bodenfläche des Leerguts L voran in eine Richtung parallel zu dem Abschnitt des Leergut-Leitelements 1, mit welchem das zweite Ende der Leergutrutsche R verbunden ist.

Der Leergutrücknahmeautomat 203 ist in einem Automatenraum 205 einer Leergutrücknahmestelle (z.B. einem Super- oder Getränkemarkt) aufgestellt, sodass Verbraucher an einer Vorderseite des Leergutrücknahmeautomaten 203 das Leergut L in diesen hinein einführen und somit zurückgeben können. Gewöhnlich ist der Leergutrücknahmeautomat 203 so aufgestellt, dass zumindest dessen Rückseite (Leergutausgabe des Leergutrücknahmeautomaten) räumlich vom Automatenraum 205 getrennt ist, z.B. durch eine Wand 207. An der Rückseite des Leergutrücknahmeautomaten 203 (d.h. hinter der Wand 207) wird die Handhabung des Leerguts L durchgeführt, sodass Lärm und Gerüche durch die Leerguthandhabung vom Automatenraum 205 ferngehalten werden.

Der Leergutrücknahmeautomat 203 kann einen Sensor 209 zur Erfassung des Leerguts L (bspw. des Leerguttyps) aufweisen (z.B. eine Kamera und/oder einen Barcodescanner), welcher z.B. mit der Steuereinrichtung 81 verbunden ist, um zu erfassen, wann das in den Leergutrücknahmeautomaten 203 eingegebene Leergut L im Leergut-Leitelement 1 ankommt (z.B. im Ausgabebereich A des Leergut-Leitelements 1 auf den Leergut-Zuführabschnitt Z des Leergut-Handhabungstischs 53 abgestellt wird). Darauf basierend kann die Steuereinrichtung 81 die Aufstellunterstützungseinrichtung 83 steuern. Da der Leergutrücknahmeautomat 203 ein gewöhnlicher Leergutrücknahmeautomat ist, wird eine detaillierte Beschreibung davon ausgelassen.

In der **Figur 3a** ist ein Leergut-Rücknahmesystem 201 gemäß einer beispielhaften ersten Ausführungsform gezeigt, bei welcher die Leergut-Handhabungseinrichtung 51 mit dem linken Leergut-Leitelement 1 ausgestattet ist. Der Leergutrücknahmeautomat 203 ist hier senkrecht zur Wand 207 ausgerichtet, steht an der Rückseite der Wand 207 vor (üblicher Weise ist der Leergutrücknahmeautomat 203 mit einer Vorderseite davon zumindest im Wesentlichen bündig mit der Wand 207 aufgestellt) und ist an die Leergut-Handhabungseinrichtung 51 angeschlossen. Die Rückseite des Leergutrücknahmeautomaten 203 ist korrespondierend zum Tischbreitenreduktionsbereich (bspw. dem konvergierenden Abschnitt des Tischflächenrands 93) aufgestellt, d.h., die Rückseite des Leergutrücknahmeautomaten 203 weist zur Förderrichtung den Randwinkel γ auf und kann z.B. den Tischbreitenreduktionsbereich kontaktieren. In diesem Fall ist der Randwinkel γ in etwa 7,5°, wodurch sich zusammen mit einer Länge des Leergut-Sortiertischs 57 von z.B. in etwa 2 m der Leergut-Sortiertisch 57 mit seinem Ende (Ende mit Verteilerelement V) der Rückseite der Wand 207 annähert (bspw. diese kontaktiert), sodass eine platzsparende Anordnung des Leergut-Rücknahmesystems 201 gewährleistet ist. In dieser Anordnung wird dem Leergut-Leitelement 1 das Leergut mit einem ersten Eingabewinkel β1 von in etwa 97,5° eingegeben. Bei anderen Längen des Leergut-Sortiertischs 57, bspw. 3 m, 4 m, 5 m oder mehr, kann der Randwinkel γ entsprechend angepasst sein.

In der **Figur 3b** ist ein Leergut-Rücknahmesystem 201 gemäß einer zweiten beispielhaften Ausführungsform gezeigt, bei welchem die Leergut-Handhabungseinrichtung 51 mit dem rechten Leergut-Leitelement 1 ausgestattet ist. Hier sind ein erster und ein zweiter Leergutrücknahmeautomat 203, 203' an der Leergut-Handhabungseinrichtung 51 angeschlossen. Die Leergutrücknahmeautomaten 203, 203' sind hier senkrecht zur Wand 207 angeordnet, wobei die Wand 207 zwei zueinander rechtwinklige Schenkel aufweist, sodass jeweils einer der Leergutrücknahmeautomaten 203, 203' an einem Schenkel der Wand 207 an der Rückseite der Wand 207 vorsteht. Das heißt, die Leergutrücknahmeautomaten 203, 203' sind zueinander rechtwinklig angeordnet und geben das ihnen eingegebene Leergut L rechtwinklig zueinander aus. Der Leergut-Handhabungstisch 53 der Leergut-Handhabungseinrichtung 51 ist derart angeordnet, dass der Bereich konstanter Breite des Tischflächenrands 91 zur Rückseite des ersten Leergutrücknahmeautomaten 203 korrespondiert und dass der stirnseitige Rand 95 zur Rückseite des zweiten Leergutrücknahmeautomaten 203' korrespondiert. Eine erste Leergutrutsche R verbindet den dritten Leitabschnitt 19 des Leergut-Leitelements 1 mit der Leergutausgabe des ersten Leergutrücknahmeautomaten 203 und eine zweite Leergutrutsche R' verbindet den Zentralabschnitt 3 des Leergut-Leitelements 1 mit der Leergutausgab des zweiten Leergutrücknahmeautomaten 203'. Somit gibt der erste Leergutrücknahmeautomat 203 dem Leergut-Leitelement 1 das Leergut L mit einem ersten Eingabewinkel β1 von in etwa 90° ein und gibt der zweite Leergutrücknahmeautomat 203' dem Leergut-Leitelement 1 das Leergut L mit einem ersten Eingabewinkel β1' von in etwa 0° ein.

In beiden der oben beschriebenen Ausführungsformen ist es möglich, einen oder zwei Leergutrücknahmeautomaten zu verwenden, wobei auch der erste Eingabewinkel β1 mit mehr als 90° sowie der zweite Eingabewinkel β2 realisierbar sind: Beispielsweisewäre im Falle der zweiten Ausführungsform der zweite Leergutrücknahmeautomat 203' entsprechend dem zweiten Eingabewinkel β2 positionierbar und der erste Leergutrücknahmeautomat 203 entsprechend dem ersten Eingabewinkel β1 (> 90°) positionierbar.

## Patentansprüche

1. Leergut-Handhabungseinrichtung (51), aufweisend:
• einen Leergut-Handhabungstisch (53) mit einer Tischfläche (55), einem Leergut-Zuführabschnitt (Z), dem Leergut (L) unterschiedlichen Leerguttyps zuführbar ist, und einem Leergut-Abführabschnitt (B), in dem das zugeführte Leergut (L) abführbar ist,
• eine Leergut-Fördereinrichtung (61), welche an dem Leergut-Handhabungstisch (53) angebracht ist, sich zwischen dem Leergut-Zuführabschnitt (Z) und dem Leergut-Abführabschnitt (B) erstreckt und derart ausgebildet ist, dass das dem Leergut-Zuführabschnitt (Z) zugeführte Leergut (L) von dem Leergut-Zuführabschnitt (Z) zu dem Leergut-Abführabschnitt (B) entlang einer Förderrichtung (F) überführbar ist, und
• ein Leergut-Leitelement (1) zum Leiten von Leergut unter Verwendung von Schwerkraft, aufweisend:
▪ einen Zentralabschnitt (3), welcher sich zu einer Schwerkraftrichtungsachse (S) mit einem Zentralabschnitt-Neigungswinkel (α1) erstreckt und in Schwerkraftrichtung nacheinander folgend einen Leergut-Eingabebereich (E), einen Leergut-Leitbereich (L) und einen Leergut-Ausgabebereich (A) aufweist, wobei der Zentralabschnitt (3) als eine Rutschbahn mit einer bezüglich der Schwerkraftrichtungsachse (S) ersten und zweiten Randseite (13, 15) ausgeführt ist und über den Zentralabschnitt (3) Leergut in den Leergut-Eingabebereich (E) eingebbar ist,
▪ einen ersten Leitabschnitt (5), welcher an der ersten oder an der zweiten Randseite (13, 15) der Rutschbahn angeordnet ist, sich zumindest entlang des Leergut-Eingabebereichs (E) und des Leergut-Leitbereichs (L) an der Randseite der Rutschbahn erstreckt, mit der Rutschbahn entlang der Randseite verbunden ist und zur Schwerkraftrichtungsachse (S) einen Erster-Leitabschnitt-Neigungswinkel (α2) aufweist, um die Rutschbahn seitlich zu begrenzen,
▪ einen zweiten Leitabschnitt (7), welcher an der anderen Randseite der Rutschbahn angeordnet ist, sich zumindest entlang des Leergut-Leitbereichs (L) an der Randseite der Rutschbahn erstreckt, mit der Rutschbahn entlang der Randseite verbunden ist und zur Schwerkraftrichtungsachse (S) einen Zweiter-Leitabschnitt-Neigungswinkel (α3) aufweist, um die Rutschbahn seitlich zu begrenzen, und
▪ einen dritten Leitabschnitt (19), welcher an der Randseite der Rutschbahn angeordnet ist, an der der zweite Leitabschnitt (7) angeordnet ist, an einem Übergang des Leergut-Eingabebereichs (E) zum Leergut-Leitbereich (L) mit dem zweiten Leitabschnitt (7) verbunden ist und eingerichtet ist, um parallel zum dritten Leitabschnitt (19) Leergut in den Leergut-Eingabebereich (E) zuzuführen,
wobei das Leergut-Leitelement (1) am Leergut-Handhabungstisch (53) mit der Schwerkraftrichtungsachse (S) senkrecht zur und oberhalb der Tischfläche (55) angebracht ist und am Leergut-Zuführabschnitt (Z) derart angeordnet ist, dass die Förderrichtung (F) in einer Ebene liegt, welche der Zentralabschnitt-Neigungswinkel (α1) aufspannt, um das Leergut (L), welches dem Leergut-Leitelement (1) durch den Leergut-Eingabebereich (E) zugeführt wird, durch den Leergut-Leitbereich (L) zu leiten und durch den Leergut-Ausgabebereich (A) in einer Aufrecht-Position in den Leergut-Zuführabschnitt (Z) des Leergut-Handhabungstischs (53) abzustellen,
wobei entlang der Schwerkraftrichtungsachse (S) betrachtet Leergut (L) in den Leergut-Eingabebereich (E) des Leergut-Leitelements (1) in einer Richtung eingebbar ist, welche in einem Bereich liegt, der an einer Seite des ersten Leitabschnitts zur Förderrichtung in etwa 15°, bevorzugt in etwa 10°, einschließt und an einer Seite des zweiten Leitabschnitts zur Förderrichtung in etwa 110°, bevorzugt in etwa 97,5°, einschließt.

2. Leergut-Handhabungseinrichtung (51) gemäß Anspruch 1, wobei der Zentralabschnitt (3) eine Trapezgestalt hat, welche quer zur Schwerkraftrichtungsachse (S) einen in Schwerkraftrichtung oberen Rand (9) des Leergut-Eingabebereichs (E) als eine lange Grundseite, einen in Schwerkraftrichtung unteren Rand (11) des Leergut-Ausgabebereichs (A) als eine kurze Grundseite und die erste und die zweite Randseite (13, 15) der Rutschbahn als Schenkel entlang der Schwerkraftrichtungsachse (S) aufweist, wobei die Schenkel in Schwerkraftrichtung zueinander konvergieren.

3. Leergut-Handhabungseinrichtung (51) gemäß irgendeinem der vorhergehenden Ansprüche,
wobei der erste Leitabschnitt (5) eine Trapezgestalt hat, welche quer zur Schwerkraftrichtungsachse (S) einen zum oberen Rand (9) des Leergut-Eingabebereichs (E) korrespondierenden Rand (9') als eine lange Grundseite, einen zum unteren Rand (11) des Leergut-Leitbereichs (L) korrespondierenden Rand (11') als eine kurze Grundseite und entlang der Schwerkraftrichtungsachse (S) die erste Randseite oder die zweite Randseite (13, 15) der Rutschbahn als einen ersten Schenkel aufweist, wobei ein zweiter Schenkel der Trapezgestalt einen äußeren Rand (17) des ersten Leitabschnitts (5) bildet, welcher zum ersten Schenkel konvergiert oder parallel ist.

4. Leergut-Handhabungseinrichtung (51) gemäß irgendeinem der vorhergehenden Ansprüche,
wobei der Zentralabschnitt (3), der erste Leitabschnitt (5) und der zweite Leitabschnitt (7) als eine Rinne ausgebildet sind, welche sich in Schwerkraftrichtung trichterförmig verjüngt, und
wobei optional der erste und der zweite Leitabschnitt (5, 7) an der zugehörigen der ersten und der zweiten Randseite (13, 15) mit einem sich in Schwerkraftrichtung verringernden Krümmungsradius (R1-R4) mit dem Zentralabschnitt (3) verbunden sind.

5. Leergut-Handhabungseinrichtung (51) gemäß irgendeinem der vorhergehenden Ansprüche,
wobei der Zentralabschnitt-Neigungswinkel (α1) in einem Bereich von in etwa 25° bis in etwa 35°, bevorzugt in etwa 30°, der Erster-Leitabschnitt-Neigungswinkel (α2) in einem Bereich von in etwa 5° bis in etwa 15°, bevorzugt in etwa 10°, und der Zweiter-Leitabschnitt-Neigungswinkel (α3) in einem Bereich von in etwa 15° bis in etwa 25°, bevorzugt in etwa 20°, liegen.

6. Leergut-Handhabungseinrichtung (51) gemäß irgendeinem der vorhergehenden Ansprüche,
wobei die Leergut-Fördereinrichtung (61) als ein Förderband ausgebildet ist, welches auf der Tischfläche (55) vom Leergut-Zuführabschnitt (Z) zum Leergut-Abführabschnitt (B) verläuft, und
wobei unterhalb des Förderbands im Leergut-Zuführabschnitt (Z) des Leergut-Handhabungstischs (53) eine Leergut-Dämpfungseinrichtung (71) bereitgestellt ist, die eingerichtet ist, um Stöße des auf den Leergut-Zuführabschnitt (Z) aufgestellten Leerguts (L) zu dämpfen.

7. Leergut-Handhabungseinrichtung (51) gemäß Anspruch 6, wobei die Leergut-Dämpfungseinrichtung (71) durch zwei in einer Aussparung (73) der Tischfläche (55) des Leergut-Handhabungstischs (51) übereinander angeordnete Dämpfungselemente (75, 77) unterschiedlicher Härte gebildet ist.

8. Leergut-Handhabungseinrichtung (51) gemäß irgendeinem der vorhergehenden Ansprüche,
wobei die Tischfläche (55) des Leergut-Handhabungstischs (53) beidseitig zur Förderrichtung (F) Tischflächenränder (91, 93) aufweist, die entweder in der Förderrichtung (F) zueinander derart konvergieren, dass die Tischfläche (55) in einem Tischbreitenreduktionsbereich in Förderrichtung (F) ausgehend vom Leergut-Leitelement (1) quer zur Förderrichtung (F) eine geringere Breite hat als in einem Bereich entgegen der Förderrichtung (F) ausgehend vom Leergut-Leitelement (1), oder in diesem Tischbreitenreduktionsbereich eine Aussparung (91', 93') aufweisen, welche lokal eine Breite der Tischfläche (55) quer zur Förderrichtung (F) reduziert.

9. Leergut-Handhabungseinrichtung (51) gemäß irgendeinem der vorhergehenden Ansprüche, weiter aufweisend:
• eine Steuereinrichtung (81), welche einen Sensor aufweist, der der Steuereinrichtung (81) Informationen darüber bereitstellt, ob dem Leergut-Leitelement (1) Leergut (L) eingegeben wird, und
• eine Aufstellunterstützungseinrichtung (83), welche zumindest ein von dem Leergut-Leitelement (1) in Förderrichtung (F) entfernt angeordnetes Stützelement (85, 85') aufweist, welches durch die Steuereinrichtung (81) gesteuert selektiv in eine erste Position, in der im Leergut-Zuführabschnitt (Z) durch den Leergut-Ausgabebereich (A) des Zentralabschnitts (3) des Leergut-Leitelements (1) und das Stützelement (85, 85') ein Raum gebildet ist, in dem aufgestelltes Leergut (L) aufnehmbar und durch das Stützelement (85, 85') in der Förderrichtung (F) zurückhaltbar ist, und in eine zweite Position bringbar ist, in der das Stützelement (85, 85') den Raum in der Förderrichtung (F) nicht begrenzt und in dem Raum aufgestelltes Leergut (L) in der Förderrichtung (F) überführbar ist.

10. Leergut-Rücknahmesystem (201) mit
• einer Leergut-Handhabungseinrichtung (51) gemäß irgendeinem der vorhergehenden Ansprüche und
• einem Leergutrücknahmeautomaten (203), in welchen hinein manuell Leergut (L) eingebbar ist und von welchem das eingegebene Leergut (L) automatisch dem Leergut-Eingabebereich (E) des Leergut-Leitelements (1) zuführbar ist.

11. Leergut-Rücknahmesystem (201) gemäß Anspruch 10, weiter eine Leergutrutsche (R) aufweisend, welche an einem ersten Ende mit einer Leergutausgabe des Leergutrücknahmeautomaten (203) verbunden ist und am zweiten Ende im Leergut-Eingabebereich (E) des Leergut-Leitelements (1) mit zumindest einem vom Zentralabschnitt (3), vom ersten Leitabschnitt (5) und vom dritten Leitabschnitt (19) des Leergut-Leitelements (1) verbunden ist,
wobei die Leergutrutsche (R) derart eingerichtet ist, dass das aus dem Leergutrücknahmeautomaten (203) ausgegebene Leergut (L) parallel zu dem zumindest einen vom Zentralabschnitt (3), vom ersten Leitabschnitt (5) und vom dritten Leitabschnitt (19) in den Leergut-Eingabebereich (E) des Leergut-Leitelements (1) eingebbar ist.

## Claims

1. Empty goods handling installation (51) having:
- an empty goods handling table (53) having a table surface (55), an empty goods infeed portion (Z) to which empty goods (L) of different empty goods types are able to be fed, and an empty goods discharge portion (B) in which the infed empty goods (L) are able to be discharged;
- an empty goods conveyor installation (61) which is attached to the empty goods handling table (53), extends between the empty goods infeed portion (Z) and the empty goods discharge portion (B), and is configured in such a manner that the empty goods (L) fed to the empty goods infeed portion (Z) are able to be transferred along a conveying direction (F) from the empty goods infeed portion (Z) to the empty goods discharge portion (B); and
- an empty goods guide element (1) for guiding empty goods while using gravity, having:
o a central portion (3) which in relation to a direction of gravity axis (S) extends at a central portion angle of inclination (α1) and in the direction of gravity has in succession an empty goods entry region (E), an empty goods guide region (L) and an empty goods exit region (A), wherein the central portion (3) is embodied as a chute having in terms of the direction of gravity axis (S) a first peripheral side (13) and a second peripheral side (15), empty goods being able to be entered into the empty goods entry region (E) by way of the central portion (3);
o a first guide portion (5) which is disposed on the first peripheral side (13) or on the second peripheral side (15) of the chute, on the peripheral side chute extends at least along the empty goods entry region (E) and the empty region guide region (L), is connected to the chute along the peripheral side, and in relation to the direction of gravity axis (S) has a first guide portion angle of inclination (α2) so as to laterally delimit the chute;
o a second guide portion (7) which is disposed on the other peripheral side of the chute, on the peripheral side of the chute extends at least along the empty goods guide region (L), is connected to the chute along the peripheral side, and in relation to the direction of gravity axis (S) has a second guide portion angle of inclination (α3) so as to laterally delimit the chute; and
o a third guide portion (19) which is disposed on that peripheral side of the chute on which the second guide portion (7) is disposed, is connected to the second guide portion (7) at a transition from the empty goods entry region (E) to the empty goods guide region (L), and is specified for feeding empty goods parallel to the third guide portion (19) into the empty goods entry region (E);
wherein the empty goods guide element (1) is attached to the empty goods handling table (53) with the direction of gravity axis (S) being perpendicular to and above the table surface (55), and is disposed on the empty goods infeed portion (Z) in such a manner that the conveying direction (F) lies in a plane which by the central portion angle of inclination (α1) is defined so as to guide by way of the empty goods guide region (L) the empty goods (L) fed to the empty goods guide element (1) by way of the empty good entry region (E), and by way of the empty goods exit region (A) to deposit said empty goods (L) in an upright position in the empty goods infeed portion (Z) of the empty goods handling table (53);
wherein, when viewed along the direction of gravity axis (S), empty goods (L) are able to be entered into the empty goods entry region (E) of the empty goods guide element (1) in a direction which lies in a range which on one side of the first guide portion in relation to the conveying direction encloses approximately 15°, preferably approximately 10°, and on one side of the second guide portion in relation to the conveying direction encloses approximately 110°, preferably approximately 97.5°.

2. Empty goods handling installation (51) according to Claim 1,
wherein the central portion (3) has a trapezoidal design which, transversely to the direction of gravity axis (S), has in the direction of gravity an upper periphery (9) of the empty goods entry region (E) as a long base side, in the direction of gravity has a lower periphery (11) of the empty goods exit region (A) as a short base side, and has the first peripheral side (13) and the second peripheral side (15) of the chute as legs along the direction of gravity axis (S), wherein the legs mutually converge in the direction of gravity.

3. Empty goods handling installation (51) according to any of the preceding claims,
wherein the first guide portion (5) has a trapezoidal design which, transversely to the direction of gravity axis (S), has a periphery (9') corresponding to the upper periphery (9) of the empty goods entry region (E) as a long base side, a periphery (11') corresponding to the lower periphery (11) of the empty goods guide region (L) as a short base side, and along the direction of gravity axis (S) has the first peripheral side (13) or the second peripheral side (15) of the chute as a first leg, wherein a second leg of the trapezoidal design forms an external periphery (17) of the first guide portion (5), said external periphery converging with the first leg or being parallel thereto.

4. Empty goods handling installation (51) according to any of the preceding claims,
wherein the central portion (3), the first guide portion (5) and the second guide portion (7) are configured as a groove which in the manner of a funnel tapers in the direction of gravity; and wherein optionally the first guide portion (5) and the second guide portion (7) on the associated one of the first peripheral side (13) and second peripheral side (15) are connected to the central portion (3) by way of a curvature radius (R1-R4) which decreases in the direction of gravity.

5. Empty goods handling installation (51) according to any of the preceding claims,
wherein the central portion angle of inclination (α1) is in a range from approximately 25° to approximately 35°, preferably approximately 30°; the first guide portion angle of inclination (α2) is in the range from approximately 5° to approximately 15°, preferably approximately 10°; and the second guide portion angle of inclination (α3) is in the range from approximately 15° to approximately 25°, preferably approximately 20°.

6. Empty goods handling installation (51) according to any of the preceding claims,
wherein the empty goods conveyor installation (61) is configured as a conveyor belt which on the table surface (55) runs from the empty goods infeed portion (Z) to the empty goods discharge portion (B); and
wherein an empty goods damping installation (71) is provided below the conveyor belt in the empty goods infeed portion (Z) of the empty goods handling table (53), said empty goods damping installation (71) being specified for damping shocks of the empty goods (L) placed onto the empty goods infeed portion (Z) .

7. Empty goods handling installation (51) according to Claim 6,
wherein the empty goods damping installation (71) is formed by two damping elements (75, 77) which differ in terms of hardness and are disposed on top of one another in a clearance (73) of the table surface (55) of the empty goods handling table (51).

8. Empty goods handling installation (51) according to any of the preceding claims,
wherein the table surface (55) of the empty goods handling table (53) on both sides of the conveying direction (F) has table surface peripheries (91, 93) which either mutually converge in the conveying direction (F) in such a manner that the table surface (55) in a table width reduction region, proceeding from the empty goods guide element (1) in the conveying direction (F), transversely to the conveying direction (F) has a smaller width than in a region proceeding from the empty goods guide element (1) counter to the conveying direction (F); or
in this table width reduction region have a clearance (91', 93') which locally reduces a width of the table surface (55) transversely to the conveying direction (F).

9. Empty goods handling installation (51) according to any of the preceding claims, furthermore having:
- a control installation (81) which has a sensor that provides the control installation (81) with items of information pertaining to whether empty goods (L) are entering the empty goods guide element (1); and
- a placing support installation (83) which has at least one support element (85, 85') which in the conveying direction (F) is disposed so as to be distal from the empty goods guide element (1) and which, controlled by the control installation (81), is able to be selectively transferred to a first position in which a space in which placed empty goods (L) are able to be received and able to be retained in the conveying direction (F) by the support element (85, 85') is formed in the empty goods infeed portion (Z) by the empty goods exit region (A) of the central portion (3) of the empty goods guide element (1) and by the support element (85, 85'), and is able to be transferred to a second position in which the support element (85, 85') in the conveying direction (F) does not delimit the space and empty goods (L) placed in the space are able to be transferred in the conveying direction (F).

10. Empty goods return system (201) having
- an empty goods handling installation (51) according to any of the preceding claims; and
- an empty goods return automat (203) into which empty goods (L) are able to be manually entered, and from which the entered empty goods (L) are able to be automatically transferred to the empty goods entry region (E) of the empty goods guide element (1).

11. Empty goods return system (201) according to Claim 10, furthermore having an empty goods chute (R) which at a first end is connected to an empty goods exit of the empty goods return automat (203), and at the second end, in the empty goods entry region (E) of the empty goods guide element (1), is connected to at least one of the central portion (3), the first guide portion (5) and the third guide portion (19) of the empty goods guide element (1); wherein the empty goods chute (R) is specified in such a manner that the empty goods (L) exiting the empty goods return automat (203) are able to be entered parallel to the at least one central portion (3), from the first guide portion (5) and from the third guide portion (19), into the empty goods entry region (E) of the empty goods guide element (1).

## Revendications

1. Appareil de manipulation de produits vides (51), comprenant :
- une table de manipulation de produits vides (53) ayant une surface de table (55), une section d'introduction de produits vides (Z), dans laquelle des produits vides (L) de différents types de produits vides peuvent être introduits, et une section de déchargement de produits vides (B), dans laquelle le produit vide alimenté (L) peut être déchargé,
- un appareil de transport de produits vides (61), qui est disposé sur la table de manipulation de produits vides (53), s'étend entre la section d'introduction de produits vides (Z) et la section de déchargement de produits vides (B), et est configuré de telle sorte que le produit vide (L) introduit dans la section d'introduction de produits vides (Z) puisse être transféré de la section d'introduction de produits vides (Z) à la section de déchargement de produits vides (B) le long d'une direction de transport (F), et
- un élément de guidage de produits vides (1) pour le guidage de produits vides en utilisant la force de pesanteur, comprenant :
- une section centrale (3), qui s'étend par rapport à un axe de direction de la force de pesanteur (S) à un angle d'inclination de section centrale (α1) et comprend, successivement dans la direction de la force de pesanteur, une zone d'entrée de produits vides (E), une zone de guidage de produits vides (L) et une zone de sortie de produits vides (A), la section centrale (3) étant réalisée sous la forme d'un toboggan muni d'un premier et d'un deuxième bord latéral (13, 15) au regard de l'axe de direction de la force de pesanteur (S) et des produits vides pouvant être introduits dans la zone d'entrée de produits vides (E) par l'intermédiaire de la section centrale (3),
- une première section de guidage (5), qui est agencée sur le premier ou sur le deuxième bord latéral (13, 15) du toboggan, s'étend au moins le long de la zone d'entrée de produits vides (E) et de la zone de guidage de produits vides (L) sur le bord latéral du toboggan, est reliée avec le toboggan le long du bord latéral, et présente par rapport à l'axe de direction de la force de pesanteur (S) un angle d'inclinaison de première section de guidage (α2), afin de délimiter latéralement le toboggan,
- une deuxième section de guidage (7), qui est agencée sur l'autre bord latéral du toboggan, s'étend au moins le long de la zone de guidage de produits vides (L) sur le bord latéral du toboggan, est reliée avec le toboggan le long du bord latéral, et présente par rapport à l'axe de direction de la force de pesanteur (S) un angle d'inclinaison de deuxième section de guidage (α3), afin de délimiter latéralement le toboggan, et
- une troisième section de guidage (19), qui est agencée sur le bord latéral du toboggan, sur lequel la deuxième section de guidage (7) est agencée, est reliée avec la deuxième section de guidage (7) au niveau d'une transition de la zone d'entrée de produits vides (E) à la zone de guidage de produits vides (L), et est conçue pour acheminer des produits vides dans la zone d'entrée de produits vides (E) parallèlement à la troisième section de guidage (19),
l'élément de guidage de produits vides (1) étant disposé sur la table de manipulation de produits vides (53) avec l'axe de direction de la force de pesanteur (S) perpendiculaire à et au-dessus de la surface de table (55), et étant agencé sur la section d'introduction de produits vides (Z) de telle sorte que la direction de transport (F) se situe dans un plan, qui définit l'angle d'inclinaison de section centrale (α1), afin de guider le produit vide (L), qui est introduit dans l'élément de guidage de produits vides (1) à travers la zone d'entrée de produits vides (E), à travers la zone de guidage de produits vides (L) et pour le ranger à travers la zone de sortie de produits vides (A) dans une position verticale dans la section d'introduction de produits vides (Z) de la table de manipulation de produits vides (53),
tel que vu le long de l'axe de direction de la force de pesanteur (S), le produit vide (L) pouvant être introduit dans la zone d'entrée de produits vides (E) de l'élément de guidage de produits vides (1) dans une direction qui se situe dans une zone qui inclut, sur un côté de la première section de guidage par rapport à la direction de transport, environ 15°, de préférence environ 10°, et, sur un côté de la deuxième section de guidage par rapport à la direction de transport, environ 110°, de préférence environ 97,5°.

2. Appareil de manipulation de produits vides (51) selon la revendication 1, dans lequel la section centrale (3) a une forme trapézoïdale, qui comprend perpendiculairement à l'axe de direction de la force de pesanteur (S) un bord supérieur (9), dans la direction de la force de pesanteur, de la zone d'entrée de produits vides (E) en tant que côté de base long, un bord inférieur (11), dans la direction de la force de pesanteur, de la zone de sortie de produits vides (A) en tant que côté de base court, et le premier et le deuxième bord latéral (13, 15) du toboggan en tant que branches le long de l'axe de direction de la force de pesanteur (S), les branches convergeant l'une vers l'autre dans la direction de la force de pesanteur.

3. Appareil de manipulation de produits vides (51) selon l'une quelconque des revendications précédentes,
dans lequel la première section de guidage (5) a une forme trapézoïdale, qui comprend perpendiculairement à l'axe de la direction de la force de pesanteur (S) un bord (9') correspondant au bord supérieur (9) de la zone d'entrée de produits vides (E) en tant que côté de base long, un bord (11') correspondant au bord inférieur (11) de la zone de guidage de produits vides (L) en tant que côté de base court et, le long de l'axe de direction de la force de pesanteur (S), le premier bord latéral ou le deuxième bord latéral (13, 15) du toboggan en tant que première branche, une deuxième branche de la forme trapézoïdale formant un bord extérieur (17) de la première section de guidage (5), qui converge vers ou est parallèle à la première branche.

4. Appareil de manipulation de produits vides (51) selon l'une quelconque des revendications précédentes,
dans lequel la section centrale (3), la première section de guidage (5) et la deuxième section de guidage (7) sont configurées sous la forme d'une rigole, qui se rétrécit en forme d'entonnoir dans la direction de la force de pesanteur, et
dans lequel la première et la deuxième section de guidage (5, 7) sont éventuellement reliées à la section centrale (3) sur le premier et le deuxième bord latéral associé (13, 15) avec un rayon de courbure (R1-R4) se réduisant dans la direction de la force de pesanteur.

5. Appareil de manipulation de produits vides (51) selon l'une quelconque des revendications précédentes,
dans lequel l'angle d'inclinaison de section centrale (α1) se situe dans une plage allant d'environ 25° à environ 35°, de préférence d'environ 30°, l'angle d'inclinaison de première section de guidage (α2) dans une plage allant d'environ 5° à environ 15°, de préférence d'environ 10°, et l'angle d'inclinaison de deuxième section de guidage (α3) dans une plage allant d'environ 15° à environ 25°, de préférence d'environ 20°.

6. Appareil de manipulation de produits vides (51) selon l'une quelconque des revendications précédentes,
dans lequel l'appareil de transport de produits vides (61) est configuré sous la forme d'une bande de transport, qui s'étend sur la surface de table (55) depuis la section d'introduction de produits vides (Z) jusqu'à la section de déchargement de produits vides (B), et dans lequel un appareil d'amortissement de produits vides (71) est fourni en dessous de la bande de transport dans la section d'introduction de produits vides (Z) de la table de manipulation de produits vides (53), qui est conçu pour amortir des chocs du produit vide (L) placé sur la section d'introduction de produits vides (Z).

7. Appareil de manipulation de produits vides (51) selon la revendication 6,
dans lequel l'appareil d'amortissement de produits vides (71) est formé par deux éléments d'amortissement (75, 77) de dureté différente, agencés l'un au-dessus de l'autre dans un évidement (73) de la surface de table (55) de la table de manipulation de produits vides (51).

8. Appareil de manipulation de produits vides (51) selon l'une quelconque des revendications précédentes,
dans lequel la surface de table (55) de la table de manipulation de produits vides (53) comprend des deux côtés de la direction de transport (F) des bords de surface de table (91, 93), qui soit convergent l'un vers l'autre dans la direction de transport (F), de telle sorte que la surface de table (55) ait, dans une zone de réduction de la largeur de table dans la direction de transport (F) en partant de l'élément de guidage de produits vides (1), perpendiculairement à la direction de transport (F) une largeur plus petite que dans une zone à l'encontre de la direction de transport (F) en partant de l'élément de guidage de produits vides (1), soit comprennent dans cette zone de réduction de la largeur de table un évidement (91', 93'), qui réduit localement une largeur de la surface de table (55) perpendiculairement à la direction de transport (F).

9. Appareil de manipulation de produits vides (51) selon l'une quelconque des revendications précédentes, comprenant en outre :
- un appareil de commande (81), qui comprend un capteur, qui fournit des informations à l'appareil de commande (81) indiquant si un produit vide (L) est introduit dans l'élément de guidage de produits vides (1), et
- un appareil de support de placement (83), qui comprend au moins un élément support (85, 85') agencé à distance de l'élément de guidage de produits vides (1) dans la direction de transport (F), qui peut être amené, par une commande de l'appareil de commande (81), sélectivement dans une première position, dans laquelle un espace est formé dans la section d'introduction de produits vides (Z) à travers la zone de sortie de produits vides (A) de la section centrale (3) de l'élément de guidage de produits vides (1) et l'élément support (85, 85'), dans lequel un produit vide placé (L) peut être reçu et peut être retenu par l'élément support (85, 85') dans la direction de transport (F), et dans une deuxième position, dans laquelle l'élément support (85, 85') ne délimite pas l'espace dans la direction de transport (F) et le produit vide (L) placé dans l'espace peut être transféré dans la direction de transport (F).

10. Système de récupération de produits vides (201) comprenant
- un appareil de manipulation de produits vides (51) selon l'une quelconque des revendications précédentes et
- un automate de récupération de produits vides (203), dans lequel un produit vide (L) peut être introduit manuellement et à partir duquel le produit vide introduit (L) peut être acheminé automatiquement dans la zone d'entrée de produits vides (E) de l'élément de guidage de produits vides (1).

11. Système de récupération de produits vides (201) selon la revendication 10, comprenant en outre un toboggan de produits vides (R), qui est relié à une première extrémité avec une sortie de produits vides de l'automate de récupération de produits vides (203) et qui est relié à la deuxième extrémité dans la zone d'entrée de produits vides (E) de l'élément de guidage de produits vides (1) avec au moins une section parmi la section centrale (3), la première section de guidage (5) et la troisième section de guidage (19) de l'élément de guidage de produits vides (1),
dans lequel le toboggan de produits vides (R) est conçu de telle sorte que le produit vide (L) déchargé de l'automate de récupération de produits vides (203) puisse être introduit parallèlement à l'au moins une section parmi la section centrale (3), la première section de guidage (5) et la troisième section de guidage (19) dans la zone d'entrée de produits vides (E) de l'élément de guidage de produits vides (1).
